# EUROPEAN PATENT APPLICATION

(11) **EP 4 611 392 A1**
(43) Date of publication of application: **03.09.2025**
(21) Application number: 23947336.6
(22) Date of filing: 10.11.2023
(51) Int. Cl.: H04R 1/10

(54) **EARPHONE**

(30) Priority: 28.07.2023 CN 202310956970
(71) Applicant: Shenzhen Shokz Co., Ltd., Shenzhen, Guangdong 518108 (CN)
(72) Inventor: ZHONG, Lei, Shenzhen, Guangdong 518108 (CN); YAN, Zeteng, Shenzhen, Guangdong 518108 (CN); ZHENG, Zeying, Shenzhen, Guangdong 518108 (CN); XU, Jiang, Shenzhen, Guangdong 518108 (CN); TONG, Peigeng, Shenzhen, Guangdong 518108 (CN); ZHANG, Haofeng, Shenzhen, Guangdong 518108 (CN); LI, Yongjian, Shenzhen, Guangdong 518108 (CN); XIE, Shuailin, Shenzhen, Guangdong 518108 (CN); ZHU, Guangyuan, Shenzhen, Guangdong 518108 (CN); ZHANG, Lei, Shenzhen, Guangdong 518108 (CN); XIE, Guolin, Shenzhen, Guangdong 518108 (CN); MA, Xiaoyu, Shenzhen, Guangdong 518108 (CN)
(74) Representative: Wang, Bo
(86) International application number: PCT/CN2023/131100
(87) International publication number: WO 2025/025398

(57) **Abstract**

The present disclosure relates to an earphone (100), including: an ear hook (2) and a core module (1) connected to the ear hook (2), the core module (1) including an outer shell (11), a decorative cover (12), and a touch module (18), the outer shell (11) including an outer surface (OS1) away from an ear of a user when the earphone (100) is in a wearing state, the decorative cover (12) being disposed on the outer surface (OS1) of the outer shell (11) and configured to form a touch positioning region (120) for the user to perform touch positioning; a positioning protrusion (121) being disposed on the outer shell (11) and/or the decorative cover (12), the positioning protrusion (121) being located in the touch positioning region (120) and protruding from an outer surface (OS2) of the decorative cover (12) away from the outer shell (11); the touch module (18) being disposed on the outer shell (11) and including a touch detection region (182) that at least partially overlaps with the touch positioning region (120).

## Description

### TECHNICAL FIELD

This application relates to the technical field of electronic devices, and in particular, to an earphone.

### BACKGROUND

With the widespread adoption of electronic devices, electronic devices have become indispensable tools for social interaction and entertainment in daily life. As a result, users are placing increasingly higher demands on the electronic devices. Electronic devices such as earphones and smart glasses have also been widely used in people's daily lives. The earphones and smart glasses are often used in conjunction with terminals such as smartphones and computers to provide users with an enhanced auditory experience. Current earphones are typically provided with a touch control region on the outer shell, allowing users to control the earphones by touching this region. However, since the earphones are worn on the user's ears during use, it is often difficult for the user to accurately locate and touch the touch control region during operation.

### SUMMARY

The present application provides an earphone, comprising an ear hook and a core module.

The core module is connected to the ear hook, the core module including an outer shell, a decorative cover, and a touch module, the outer shell including an outer surface away from an ear of a user when the earphone is in a wearing state, the decorative cover being disposed on the outer surface of the outer shell and configured to form a touch positioning region for the user to perform touch positioning; a positioning protrusion being disposed on the outer shell and/or the decorative cover, the positioning protrusion being located in the touch positioning region and protruding from an outer surface of the decorative cover away from the outer shell; the touch module being disposed on the outer shell and including a touch detection region that at least partially overlaps with the touch positioning region.

Through the above configuration, based on the touch positioning region providing a first touch navigation positioning, setting the positioning protrusion to protrude from the outer surface of the decorative cover that is away from the outer shell facilitates the user to touch the positioning protrusion when touching the outer shell, so that the positioning protrusion can provide a second touch navigation positioning based on the decorative cover to facilitate the user to more accurately locate the touch detection region by touching the positioning protrusion, improving the convenience of touch operation. Moreover, the decorative cover can bring a decorative unique visual effect to the earphone, and compounding (at least partially overlapping) with the touch detection region based on the unique visual effect can eliminate the need to additionally set up a detection region for touch, making the earphone smaller in size. Due to the visual effect of the decorative cover, it is also easy for the user to be aware of the location of the touch detection region, reducing the user's learning cost and improving the user's convenience of touch operation.

In some embodiments, at least a portion of an edge of the decorative cover is exposed on the outer surface of the outer shell to enclose the touch positioning region.

In some embodiments, the edge of the decorative cover is configured as a ring and is completely exposed on the outer surface of the outer shell to enclose the touch positioning region; and the edge of the decorative cover surrounds the positioning protrusion.

In some embodiments, a positioning groove is disposed on the outer surface of the outer shell, and the decorative cover is accommodated in the positioning groove through a groove opening of the positioning groove.

In some embodiments, the positioning groove and the decorative cover match in shape and size; and/or, a seam between an edge of the decorative cover and an edge of the groove opening of the positioning groove is exposed on the outer surface, and the seam surrounds the positioning protrusion.

In some embodiments, the positioning protrusion protrudes from the outer surface of the outer shell, the decorative cover is provided with a positioning hole, and the positioning protrusion passes through the positioning hole; or, the positioning protrusion protrudes from the outer surface of the decorative cover and is integrally formed with the decorative cover.

In some embodiments, the outer shell has a length direction, a width direction, and a thickness direction that are perpendicular to each other, and the outer shell is stacked on the ear of the user along the thickness direction when the earphone is in the wearing state; a ratio of a dimension of the decorative cover to a dimension of the outer shell along the length direction is greater than or equal to 0.5 and less than or equal to 0.8; and a ratio of a dimension of the decorative cover to a dimension of the outer shell along the width direction is greater than or equal to 0.6 and less than or equal to 0.95.

In some embodiments, the outer shell includes a connection end connected to the ear hook and a free end away from the connection end along the length direction, and the decorative cover is closer to the connection end.

In some embodiments, the outer shell is bent along the thickness direction toward the outer surface of the outer shell so that the free end is closer to an ear hole of the ear of the user than the connection end.

In some embodiments, the outer shell has a length direction, a width direction, and a thickness direction that are perpendicular to each other, and the outer shell is stacked on the ear of the user along the thickness direction when the earphone is in the wearing state; and the positioning protrusion is configured as a strip, and an extension direction of the positioning protrusion intersects with the length direction and the width direction, respectively.

In some embodiments, a roughness of the outer surface of the decorative cover is greater than a roughness of the outer surface of the outer shell; and/or a color of the outer surface of the decorative cover is different from a color of the outer surface of the outer shell; and/or a material of the decorative cover is different from a material of the outer shell.

In some embodiments, the touch module includes a touch metal pattern and a circuit board,

the circuit board is disposed inside the outer shell, the touch metal pattern is disposed inside the outer shell or sandwiched between the decorative cover and the outer shell, the touch metal pattern is electrically connected to the circuit board, and the touch metal pattern is configured to form the touch detection region.

In some embodiments, the touch metal pattern is further configured as a radio frequency antenna of the earphone.

In some embodiments, the outer shell has a length direction, a width direction, and a thickness direction that are perpendicular to each other, and the outer shell is stacked on the ear of the user along the thickness direction when the earphone is in the wearing state; the outer shell includes a connection end connected to the ear hook and a free end away from the connection end along the length direction, and the outer shell is bent along the thickness direction toward the outer surface of the outer shell, so that the free end is closer to an ear hole of the ear of the user than the connection end, and the decorative cover is closer to the connection end.

In some embodiments, the outer surface of the outer shell and the outer surface of the decorative cover together form an outer surface of the core module; the outer surface of the core module is configured as an outwardly arched shape; at least two sound pickup holes are disposed on the outer surface of the core module; the two sound pickup holes are located on two opposite slopes of the outer surface of the core module, respectively; and/or, the touch detection region is closer to the connection end than the positioning protrusion, or the touch detection region surrounds the positioning protrusion.

In some embodiments, the positioning protrusion is configured as a strip, and the two sound pickup holes are located on two sides of the positioning protrusion, respectively.

In some embodiments, the free end has a first reference position farthest from the connection end along the length direction, and the decorative cover has a second reference position closest to the first reference position along the length direction; the outer shell includes an arcuate transition region between the first reference position and the second reference position; and from the second reference position to the first reference position, the arcuate transition region gradually approaches the ear of the user along the thickness direction when the earphone is in the wearing state.

In some embodiments, the outer shell forms an accommodation space, and the core module is provided with two sound pickup holes, the accommodation space is in flow communication with the external environment through the two sound pickup holes, one of the two sound pickup holes passes through the outer shell and is located at a periphery of the decorative cover, and the other one of the two sound pickup holes passes through the outer shell and the decorative cover; and the core module includes two microphones, and the two microphones are spaced apart in the accommodation space and correspond one-to-one with the two sound pickup holes.

In some embodiments, a distance between the two sound pickup holes is greater than or equal to a dimension of the decorative cover along an arrangement direction of the two microphones; and/or, the outer shell has a length direction and a width direction that are perpendicular to each other, the outer shell has a connection end and a free end along the length direction; the connection end is connected to the ear hook; the arrangement direction of the two microphones intersects with the length direction and the width direction, respectively; and the sound pickup hole that passes through the decorative cover is closer to the connection end and an edge of the decorative cover away from the ear hook along the width direction than the sound pickup hole located at the periphery of the decorative cover; and/or, the touch detection region is located between the two sound pickup holes.

In some embodiments, the outer shell forms an accommodation space, and the core module is provided with a sound pickup hole passing through the outer shell, the accommodation space is in flow communication with the external environment though the sound pickup hole; the core module includes a microphone and a sealing component, and the microphone is disposed in the accommodation space and corresponds to the sound pickup hole to pick up sound of the external environment through the sound pickup hole; and at least a portion of the sealing component is disposed between the outer shell and the microphone and is configured to isolate a sound pickup path from the accommodation space.

In some embodiments, the core module further includes a fixing plate, the fixing plate is accommodated in the accommodation space and includes a through hole, and the microphone is fixed to one side of the fixing plate and covers the through hole; and at least a portion of the sealing component is disposed in the accommodation space and abuts between the outer shell and a side of the fixing plate away from the microphone, and enables the through hole and the sound pickup hole to be in flow communication with each other.

In some embodiments, the microphone passes through the outer shell and is located at a periphery of the decorative cover; the sealing component includes a sealing gasket and a mesh component, and the sealing gasket and the mesh component are stacked and disposed in the accommodation space between the fixing plate and the outer shell.

In some embodiments, the sealing gasket is stacked on the fixing plate and is closer to the through hole than the mesh component; and the mesh component is located between the sealing gasket and the outer shell and is closer to the sound pickup hole than the sealing gasket.

In some embodiments, the microphone passes through the outer shell and the decorative cover; and the sealing component includes a sealing gasket and at least one mesh component, the sealing gasket is disposed in the accommodation space between the outer shell and the fixing plate and directly abuts the outer shell and the fixing plate, and the least one mesh component is disposed between the outer shell and the decorative cover.

In some embodiments, the least one mesh component includes two mesh components, one of the two mesh components is disposed between the outer shell and the decorative cover, and the other one of the two mesh components is stacked with the sealing gasket and located between the outer shell and the fixing plate.

In some embodiments, the least one mesh component includes an annular double-sided adhesive and a mesh, the annular double-sided adhesive is stacked with the mesh and bonded to the mesh, and the mesh faces the through hole and the sound pickup hole.

In some embodiments, the least one mesh component includes two layers of annular double-sided adhesive and one layer of mesh, and the mesh is stacked and bonded between the two layers of annular double-sided adhesive; or, the least one mesh component includes two layers of annular double-sided adhesive and two layers of mesh, the two layers of annular double-sided adhesive are spaced apart, one layer of the mesh is stacked and bonded between the two layers of annular double-sided adhesive, and one layer of the annular double-sided adhesive is stacked between the two layers of mesh.

In some embodiments, the fixing plate is a circuit board.

### BRIEF DESCRIPTION OF THE DRAWINGS

To more clearly illustrate the technical solutions in the embodiments of the present disclosure, the following will briefly introduce the accompanying drawings that need to be used in the description of the embodiments, and it will be obvious that the accompanying drawings in the following description are only some of the embodiments of the present disclosure, and other attachments can be obtained based on these drawings without creative labor to a person of ordinary skill in the art.
FIG. 1 is a schematic diagram illustrating an anterior contour of a user's ear;
FIG. 2 is a schematic diagram illustrating an overall structure of an earphone according to embodiments of the present disclosure;
FIG. 3 is a schematic diagram illustrating an exemplary internal structure of an earphone according to embodiments of the present disclosure;
FIG. 4 is a schematic diagram illustrating an exemplary structure of a first shell of an earphone according to some embodiments of the present disclosure;
FIG. 5 is a schematic diagram illustrating a cross-sectional view along A-A section plane in FIG. 2;
FIG. 6 is a schematic diagram illustrating positions of upper reference points on a first shell and a second shell in FIG. 5;
FIG. 7 is a schematic diagram illustrating positions of other reference points on a first shell and a second shell in FIG. 5;
FIG. 8 is a schematic diagram illustrating an exemplary structure of an earphone from a perspective according to embodiments of the present disclosure;
FIG. 9 is a schematic diagram illustrating an exemplary structure of a charging box used in conjunction with an earphone according to embodiments of the present disclosure;
FIG. 10 is a schematic diagram illustrating an exemplary structure of an earphone from another perspective according to embodiments of the present disclosure;
FIG. 11 is a schematic diagram illustrating an exemplary structure of an earphone according to embodiments of the present disclosure;
FIG. 12 is a schematic diagram illustrating another exemplary structure of an earphone according to embodiments of the present disclosure;
FIG. 13 is a schematic diagram illustrating another exemplary structure of an earphone according to embodiments of the present disclosure;
FIG. 14 is a schematic diagram illustrating another exemplary structure of an earphone according to embodiments of the present disclosure;
FIG. 15 is a schematic diagram illustrating an exemplary structure of assemblies of an earphone according to embodiments of the present disclosure;
FIG. 16 is a schematic diagram illustrating an exemplary structure of other assemblies of an earphone according to embodiments of the present disclosure;
FIG. 17 is a schematic diagram illustrating a front view of the earphone shown in FIG. 2;
FIG. 18 is a schematic diagram illustrating a cross-sectional view of the earphone shown in FIG. 17 along M-M section line;
FIG. 19 is a schematic diagram illustrating an enlarged view of a region C of the earphone shown in FIG. 17;
FIG. 20 is a schematic diagram illustrating an enlarged view of region B of the earphone shown in FIG. 17;
FIG. 21 is a schematic diagram illustrating a three-dimensional structure of an earphone according to embodiments of the present disclosure;
FIG. 22 is a schematic diagram illustrating a cross-sectional view of the earphone shown in FIG.21;
FIG.23 is a schematic diagram illustrating an exemplary exploded structure of a core module of the earphone shown in FIG. 21;
FIG. 24 is a schematic diagram illustrating an exemplary structure of a basket shown in FIG. 23 assembled in a first accommodation cavity;
FIG. 25 is a schematic diagram illustrating an enlarged structure of region A shown in FIG. 24;
FIG. 26 is a schematic diagram illustrating another enlarged structure of the region A shown in FIG. 24;
FIG. 27 is a schematic diagram illustrating a three-dimensional structure of a loudspeaker shown in FIG. 23;
FIG. 28 is a schematic diagram illustrating an assembled structure of a loudspeaker and a bracket shown in FIG. 23; and
FIG. 29 is a schematic diagram illustrating a three-dimensional structure of the bracket shown in FIG. 23.

### DETAILED DESCRIPTION

The present disclosure is described in further detail below in conjunction with the accompanying drawings and embodiments. In particular, it is noted that the following embodiments are only used to illustrate the present disclosure, but do not limit the scope of the present disclosure. Similarly, the following embodiments are only part of the embodiments of the present disclosure rather than all of the embodiments, and all other embodiments obtained by a person of ordinary skill in the art without creative labor fall within the scope of protection of the present disclosure.

References to "embodiments" in the present disclosure mean that particular features, structures, or characteristics described in conjunction with embodiments may be included in at least one embodiment of the present disclosure. It is understood by a person of ordinary skill in the art, both explicitly and implicitly, that the embodiments described in the present disclosure may be combined with other embodiments.

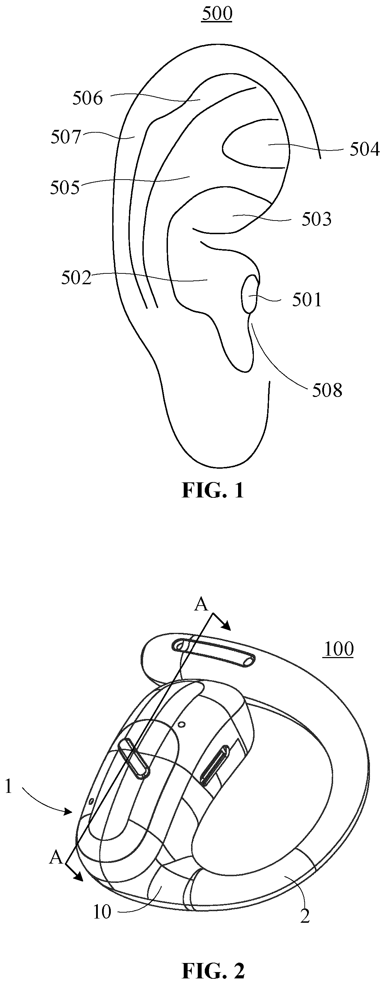

In conjunction with FIG. 1, a user's ear 500 includes physiological parts such as an external ear canal 501, a concha cavity 502, a cymba conchae 503, a triangular fossa 504, an antihelix 505, a scapha 506, a helix 507, and a tragus 508. Although the external ear canal 501 has a certain depth and extends to a tympanic membrane of the ear, for ease of description and in conjunction with FIG. 1, when not otherwise specified in the present disclosure, the external ear canal 501 specifically refers to an entrance (i.e., the ear hole) of the external ear canal 501 away from the tympanic membrane. Furthermore, the physiological parts such as the concha cavity 502, the cymba conchae 503, the triangular fossa 504 have certain volumes and certain depths. The concha cavity 502 is in direct connection with the external ear canal 501, which means that the ear hole can be simply regarded as being located at the bottom of the concha cavity 502.

Furthermore, different users may have individual differences that result in different shapes, sizes, and other dimensional differences in the ear. In order to facilitate the description and to minimize (or even eliminate) the individual differences between different users, a simulator with a head and (left and right) ears can be made based on the ANSI: S3.36, S3.25 and IEC: 60318-7 standards, e.g., GRAS 45BC KEMAR. Accordingly, in the present disclosure, the terms "a user wears an earphone," "when an earphone is in a wearing state," "in a wearing state," etc., refer to that an earphone described in the present disclosure is worn on the ear of the simulator. It is understandable that it is precisely because of the individual differences between different users that the earphone may differ somewhat from when it is worn by different users and when it is worn on the simulator of the ear, but such differences should be tolerated.

Referring to FIG. 2 to FIG. 5, an earphone 100 may include a core module 1 and an ear hook 2, and the core module 1 may include a shell assembly 10 and a loudspeaker 13. The ear hook 2 may be configured as a hook, and the earphone 100 may be worn through the ear hook 2 at a position near but not blocking the external ear canal of a user's ear. The ear hook 2 may be connected to the shell assembly 10. In a wearing state, the shell assembly 10 is located at the front side of the ear, and at least a portion of the ear hook 2 is located at the rear side of the user's ear to allow the earphone 100 to be hooked on the ear. Further, the shell assembly 10 may be used to form an accommodation space 101. The loudspeaker 13 may be disposed in the accommodation space 101, and the shell assembly 10 is provided with a sound outlet hole for transmitting air-conducted sound provided by the loudspeaker 13 to the external ear canal of the user's ear.

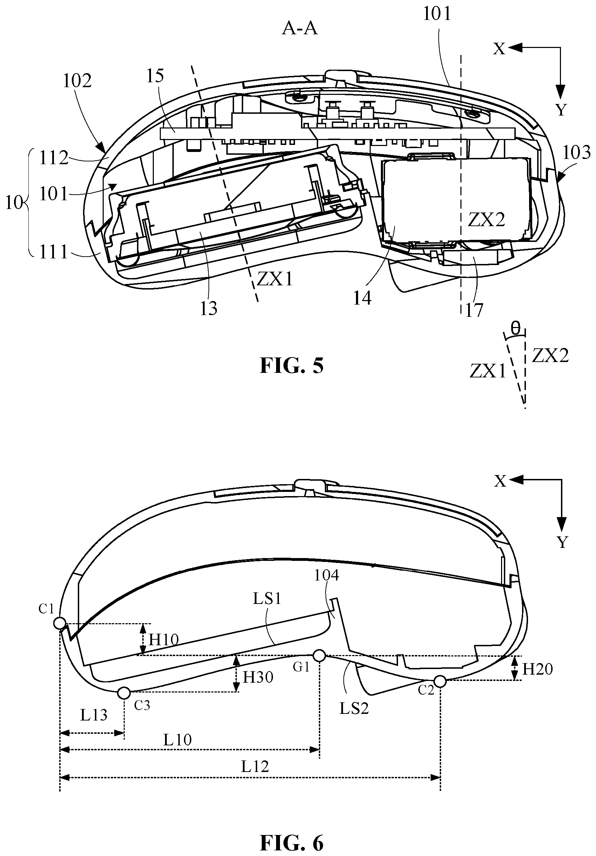

For ease of describing the shape of the shell assembly 10, the present disclosure defines that the shell assembly 10 extends along a first direction X and a second direction Y, and the first direction X may be orthogonal to the second direction Y (see FIG. 5). The first direction X refers to a length direction of the shell assembly 10, and the second direction Y refers to a thickness direction of the shell assembly 10.

In the wearing state, the shell assembly 10 is stacked on the front side of the user's ear along the second direction Y. The shell assembly 10 further has a first end 102 and a second end 103 disposed opposite each other along the first direction X. In some embodiments, the first end 102 refers to a portion facing the user's concha cavity 502 during wearing, and the second end 103 refers to a portion away from the user's concha cavity 502 compared to the first end 102. In some embodiments, the first end 102 refers to a portion that is closer to the rear side of the user's ear during wearing, and the second end 103 refers to a portion away from the rear side of the user's ear compared to the first end 102. A portion of the second end 103 may be connected to the ear hook 2, which may be referred to as the connection end 103 hereinafter, and the first end 102 may also be referred to as a free end 102 hereinafter.

In some embodiments, at least a portion of the first end 102 of the shell assembly 10 extends into the concha cavity 502 of the user's ear and makes the external ear canal of the user's ear in an open state. The user's external ear canal being in an open state refers to that the shell assembly 10 does not completely close off the external ear canal, or the shell assembly 10 does not block the external ear canal so that the external ear canal may be in flow communication with the external environment. Alternatively, due to the individual differences between different users, when the earphone 100 is worn by different users, the shell assembly 10 may block the external ear canal to some extent, but the external ear canal is still not completely blocked, and the external ear canal can still be in flow communication with the external environment.

In some embodiments, referring to FIG. 5, FIG. 6, and FIG. 7, in the second direction Y, an outer wall surface LS2 of the shell assembly 10 of the core module 1 facing the user's ear when the earphone is in the wearing state is configured in an arch shape away from the user's ear. In such cases, the design of the shell assembly 10 can fit the shape of the user's ear more closely, which reduces the pressure of the shell assembly 10 on the user's ear, especially on the tragus 508. In addition, the restriction on the extension direction of the plane can be removed, which is conducive to the first end 102 of the shell assembly 10 to more smoothly extend into the user's concha cavity 502, thereby improving the comfort and stability of wearing.

The structural design of the outer wall surface LS2 of the shell assembly 10 facing the user's ear in a wearing state can have an impact on the structure of the entire shell assembly 10, which in turn can affect the comfort of the user's wearing. For example, the structure of the outer wall surface LS2 affects the position of the first end 102 of the shell assembly 10, and if the outer wall surface LS2 results in the extension of the shell assembly 10 being too short, it may cause the first end 102 to be difficult to extend into the user's concha cavity 502, or it may cause that when the first end 102 of the shell assembly 10 extends into the user's concha cavity 502, the outer wall surface LS2 cannot avoid the user's tragus 508 well, leading to excessive pressure on the user's tragus 508. As another example, if the outer wall surface LS2 results in the extension of the shell assembly 10 being too long, the pressure of the first end 102 on the antihelix 505 and the concha cavity 502 may be increased, or it may cause that the outer wall surface LS2 cannot avoid the user's tragus 508 well, leading to excessive pressure on the user's tragus 508.

According to FIG. 6, optionally, in the first direction X, the first end 102 has a first reference point C1 that is farthest away from the second end 103. In some embodiments, the first reference point C1 may be a point of the first end 102 that is farthest from the second end 103 along the first direction X. In some embodiments, the first reference point C1 may be a point on the first end 102 that is farthest from the second end 103 along the tangential direction of the arch of the outer wall surface LS2. To prevent the arch-shaped outer wall surface LS2 from causing a portion of the shell assembly 10 that is closer to the first end 102 to be too short or too long, which results in that the first end 102 cannot fit the concha cavity 502 well and reduces the user's wearing comfort, a distance L10 between an apex G1 of the outer wall surface LS2 and the first reference point C1 along the first direction X is in a range from 14 mm to 20 mm. The apex G1 of the outer wall surface LS2 refers to a point with the greatest recessed depth in an arched region of the arch shape, or a point farthest from the user's ear in the arched region. The distance between the apex G1 and the first reference point C1 along the first direction X refers to the length of the projection of the line connecting the apex G1 and the first reference point C1 along the first direction X.

Further, to make the earphone 100 adapt to the shape of the user's ear, the distance L10 between the apex G1 of the outer wall surface LS2 and the first reference point C1 along the first direction X may be more targeted. In some embodiments, in the case where the user's ear is small, to prevent the arch-shaped outer wall surface LS2 from causing the portion of the shell assembly 10 that is closer to the first end 102 to be too long, which compresses the concha cavity 502 of the user, the distance L10 between the apex G1 of the outer wall surface LS2 and the first reference point C1 along the first direction X may be in a range from 14 mm to 16 mm. In some embodiments, in the case where the user's ear is large, to prevent the arch-shaped the outer wall surface LS2 from causing the portion of the shell assembly 10 that is closer to the first end 102 being too short, which results in that the first end 102 cannot abut against the concha cavity 502 well and leads to the problem of unstable wearing, the distance L10 between the apex G1 of the outer wall surface LS2 and the first reference point C1 along the first direction X may be in a range from 18 mm to 20 mm. Specifically, the distance L10 between the apex G1 of the outer wall surface LS2 and the first reference point C1 along the first direction X may be 14.1 mm, 15.2 mm, 16.5 mm, 17.7 mm, 18.6 mm, or 19.9 mm.

Optionally, in the second direction Y, the outer wall surface LS2 of the shell assembly 10 facing the user's ear has a second reference point C2 adjacent to the second end 103 and closest to the user's ear when the earphone is in the wearing state. In some embodiments, the second reference point C2 may be a portion of the outer wall surface LS2 that is close to the second end 103 and a point that is farthest from the apex G1 or a decorative cover (described later) along the second direction Y. To prevent the second end from being unable to stably support on the user's face when the first end 102 extends into the concha cavity 502, resulting in reduced wearing stability, a distance L12 between the second reference point C2 and the first reference point C1 along the first direction X is in a range from 20 mm to 31 mm. Alternatively, the second reference point C2 may also be the lowest point on the arch-shaped outer wall surface LS2 of the shell assembly 10 facing the user's ear. Optionally, the second reference point C2 is configured to abut the face skin located on the front side of the tragus 508 of the user's ear in the wearing state.

Further, to make the earphone 100 adapt to the shape of the user's ear, the distance L1 between the second reference point C2 and the first reference point C1 along the first direction X may be more targeted. In some embodiments, in the case where the user's ear is small, to prevent the first end 102 from being unable to abut against the concha cavity 502 well when the second reference point C2 is supported on the tragus, the distance L1 between the second reference point C2 and the first reference point C1 along the first direction X may be in a range from 20 mm to 24 mm. In some embodiments, in the case where the user's ear is large, to prevent the region where the second reference point C2 is located from being supported on the tragus and over-pressing the user's tragus, the distance L12 between the second reference point C2 and the first reference point C1 along the first direction X may be in a range from 26 mm to 31 mm. Specifically, the distance L12 between the second reference point C2 and the first reference point C1 along the first direction X may be 21.9 mm, 23.4 mm, 25 mm, 26.4 mm, or 28.02 mm.

In this case, the earphone 100 can be more stably supported on the face skin located on the front side of the user's tragus 508 through the second reference point C2, and when the earphone 100 is supported on the face skin located on the front side of the user's tragus 508 through the second reference point C2, the first end 102 can extend into the concha cavity 502 without excessively compressing the antihelix 505.

Optionally, a distance H20 between the apex G1 of the outer wall surface LS2 and the second reference point C2 along the second direction Y is in a range from 1.3 mm to 2.2 mm. Further, to make the earphone 100 adapt to the shape of the user's ear, the distance H20 between the apex G1 of the outer wall surface LS2 and the second reference point C2 along the second direction Y may be more targeted. Specifically, the distance H20 between the apex G1 of the outer wall surface LS2 and the second reference point C2 along the second direction Y may be 1.4 mm, 1.5 mm, 1.6 mm, 1.7 mm, 1.8 mm, 1.9 mm, 2.0 mm, or 2.1 mm. In such a case, when the earphone 100 is supported on the face skin located on the front side of the user's tragus 508 through the second reference point C2, the outer wall surface LS2 does not excessively compress the user's tragus 508.

Typically, limited by the volume of the concha cavity 502, if the first end 102 is too large or too thick, it may be difficult for the first end 102 to extend into the concha cavity 502. If the first end 102 is too small, it is difficult to utilize the internal space.

Optionally, in the second direction Y, the outer wall surface LS2 of the shell assembly 10 facing the user's ear has a third reference point C3 that is adjacent to the first end 102 and closest to the user's ear when the earphone is in the wearing state. In some embodiments, the third reference point C3 may be a portion of the outer wall surface LS2 that is close to the first end 102 and a point that is farthest from the apex G1 along the second direction Y. In some embodiments, the third reference point C3 may also be another lowest point on the arch-shaped outer wall surface LS2 of the shell assembly 10 facing the user's ear.

Optionally, a distance L13 between the third reference point C3 and the first reference point C1 along the first direction X is in a range from 3 mm to 5 mm. Further, to make the earphone 100 fit the shape of the user's ear and increase the internal space of the shell assembly 10, the distance L13 between the third reference point C3 and the first reference point C1 along the first direction X should be as small as possible without overly compressing the concha cavity 502. For example, the distance L13 between the third reference point C3 and the first reference point C1 along the first direction X may be in a range from 3 mm to 3.5 mm, in a range from 3.51 mm to 4 mm, in a range from 4.01 mm to 4.5 mm, or in a range from 4.51 mm to 5 mm. For example, the distance L13 between the third reference point C3 and the first reference point C1 along the first direction X may be 3.45 mm, 3.8 mm, 4.29 mm, or 4.53 mm. In this case, the first end 102 of the shell assembly 10 can extend into the concha cavity 502 relatively easily, and it is relatively easy to utilize the internal space (e.g., to facilitate the assembly of the loudspeaker 13).

Considering that if the apex G1 of the outer wall surface LS2 is recessed too little toward the inner side of the shell assembly 10, the outer wall surface LS2 may excessively compress the tragus 508 in the wearing state. If the apex G1 of the outer wall surface LS2 is recessed too much toward the inner side of the shell assembly 10, the curvature of the outer wall surface LS2 and the corresponding inner wall surface LS1 (described later) of the shell assembly 10 may be too large, which is not conducive to the layout of various components inside the shell assembly 10.

Optionally, a distance H30 between the apex G1 of the outer wall surface LS2 and the third reference point C3 along the second direction Y is in a range from 2 mm to 3 mm. For example, the distance H30 between the apex G1 of the outer wall surface LS2 and the third reference point C3 along the second direction Y may be 2.1 mm, 2.2 mm, 2.3 mm, 2.4 mm, 2.5 mm, 2.6mm, 2.7mm, 2.8mm, or 2.9mm. In this case, the outer wall surface LS2 will not excessively compress the tragus 508 during wearing, and the outer wall surface LS2 of the shell assembly 10 may not bend excessively.

Currently, the battery 14 and the loudspeaker 13 in the earphone 100 are usually located in two separate shells, which requires a long wire to connect the battery 14 and the loudspeaker 13. However, during the assembly of the earphone 100 and the use of the user, the wire is often broken due to external forces, resulting in the earphone 100 not being able to be used properly, and separating the battery 14 and the loudspeaker 13 into two separate shells also increases the size of the earphone 100 and reduces the wearing experience of the user.

In some embodiments, the earphone 100 further includes a battery 14, which may be configured to supply power to the loudspeaker 13. In the wearing state, since the first end 102 of the shell assembly 10 is closer to the external ear canal of the user's ear than the second end 103, the loudspeaker 13 may be located closer to the first end 102 within the shell assembly 10, and the battery 14 may be located closer to the second end 103 within the shell assembly 10. In this case, it is more favorable for the air-conducted sound generated by the loudspeaker 13 to be delivered to the external ear canal of the user, ensuring the user's listening effect.

In some embodiments, the loudspeaker 13 and the battery 14 may be spaced apart in the accommodation space 101 formed by the shell assembly 10 along the first direction X. In such a case, the loudspeaker 13 and the battery 14 may be assembled in the shell assembly 10 at the same time, thereby improving the assembly efficiency, reducing the length of the wire, and allowing the wire to be set within the shell assembly 10 and not easily damaged.

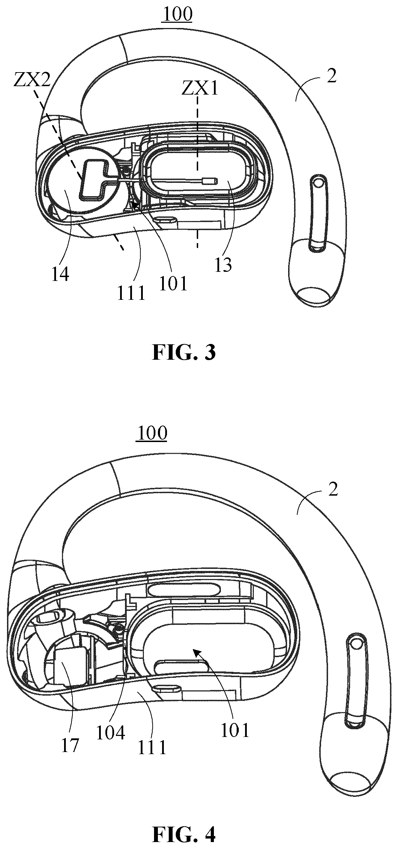

Further, a partition wall 104 may be disposed in the accommodation space 101 of the shell assembly 10, as shown in FIG. 6. The partition wall 104 may be used to separate the loudspeaker 13 and the battery 14 apart to avoid damaging the loudspeaker 13 in the event of leakage of the battery 14, etc. In some embodiments, the partition wall 104 may be integrally molded with the shell assembly 10, which may improve the consistency of the shell assembly 10. In some embodiments, the partition wall 104 may be separately molded and mounted within the shell assembly 10 by snap-fit, glue, or the like, to reduce the difficulty of processing the shell assembly 10. Referring to FIG. 4 and FIG. 5, for example, an inner wall surface LS1 of the shell assembly 10 facing the user's ear is provided with the partition wall 104 that is adjacent to the apex G1 of the outer wall surface LS2, and the loudspeaker 13 is disposed within an accommodation space formed by the partition wall 104 and the first end 102, and the battery 14 is disposed within an accommodation space formed by the partition wall 104 and the second end 103.

In some embodiments, the loudspeaker 13 has a first axis ZX1 and the battery 14 has a second axis ZX2, with each of the first axis ZX1 and the second axis ZX2 having a positive direction pointing toward the user's ear in the wearing state. On a reference plane defined by the first direction X and the second direction Y, a projection of the positive direction of the first axis line ZX1 and a projection of the second axis line ZX2 on the reference plane intersect, i.e., the loudspeaker 13 and the battery 14 are set at an inclination relative to each other. Such a setting can improve the space utilization rate of the shell assembly 10 along the first direction X, ensure that the shell assembly 10 can accommodate the various electronic components without increasing its size, and prevent the shell assembly 10 from being too large to affect the wearing experience of the user. The first axis ZX1 may be parallel to the vibration direction of a vibration diaphragm of the loudspeaker 13 and passes through the center of gravity of the loudspeaker 13, or the geometric centers or centroids of end surfaces (e.g., circular end surface, runway-shaped end surface) of the loudspeaker 13. The second axis ZX2 refers to the axis of symmetry that passes through the battery 14, or an axis passing through the geometric centers or centroids of two end surfaces of the battery 14.

Further, referring to FIG. 5, an intersection angle θ between a projection of the positive direction of the first axis ZX1 on the reference plane and a projection of the positive direction of the second axis ZX2 on the reference plane is an acute angle. To prevent an inclination angle between the battery 14 and the loudspeaker 13 from being too large while reducing the size of the shell assembly 10 along the first direction X, so as to avoid the shell assembly 10 from becoming larger along the second direction Y, the intersection angle θ between the projection of the positive direction of the first axis ZX1 on the reference plane and the positive direction of the second axis ZX2 on the reference plane may be in a range from 10° to 14° or a range from 11° to 14°. For example, the intersection angle θ may be 10°, 10.5°, 11°, 11.5°, 12°, 12.5°, 13°, 13.5°, or 14°. In some embodiments, the first axis ZX1 and the second axis ZX2 may be parallel to the reference plane, in which case the angle between the positive direction of the first axis ZX1 and the positive direction of the second axis ZX2 may be equal to the intersection angle θ.

In some embodiments, a radial dimension of the loudspeaker 13 is larger than a radial dimension of the battery 14 on a reference plane defined by the first direction X and the second direction Y, the second direction Y has a positive direction pointing toward the user's ear, and an intersection angle θ1 between a projection of the positive direction of the first axis ZX1 on the reference plane and the positive direction of the second direction Y is larger than an intersection angle θ2 between a projection of the positive direction of the second axis ZX2 and the positive direction of the second direction Y. The second axis ZX2 may be parallel to the second direction Y, thereby lowering the assembly difficulty of the battery 14. The radial dimension of the loudspeaker 13 refers to the length of the cross-section of the loudspeaker 13 on the reference plane along the direction perpendicular to the first axis ZX1. The radial dimension of the battery 14 refers to the length of the cross-section of the battery 14 on the reference plane along a direction perpendicular to the second axis ZX2.

In such cases, since the radial dimension of the loudspeaker 13 is larger than the radial dimension of the battery 14, if the loudspeaker 13 and the battery 14 are arranged side-by-side along the first direction X, the space occupied by the loudspeaker 13 along the first direction X is relatively large. Therefore, when the loudspeaker 13 is arranged inclined with respect to the second direction Y as compared to the battery 14, the influence on the change degree of the projection length of the shell assembly 10 along the first direction X is greater, which facilitates the reduction of the length of the shell assembly 10 along the first direction X.

The earphone 100 further includes a circuit board 15, the circuit board 15 being disposed in the accommodation space 101 formed by the shell assembly 10 and located on a side of the loudspeaker 13 and the battery 14 away from the user's ear. In some embodiments, the earphone 100 includes one circuit board 15, to which wires of the battery 14 and the loudspeaker 13 are connected for control, and a projection of the circuit board 15 along the second direction Y at least partially overlaps with the loudspeaker 13 and the battery 14. As shown in FIG. 5, the circuit board 15 may be arranged along the first direction X, which increases space utilization and reduces production costs while ensuring the performance of the loudspeaker 13 and the battery 14. In some embodiments, the earphone 100 includes two circuit boards 15, the two circuit boards 15 are electrically connected to the battery 14 and the loudspeaker 13, respectively, and the axes of the two circuit boards 15 are parallel to the first axis ZX1 of the loudspeaker 13 and the second axis ZX2 of the battery 14, respectively, which further reduces the size of the shell assembly 10.

In some embodiments, the shell assembly 10 includes a first shell 111 and a second shell 112 that match each other along the second direction Y. The loudspeaker 13 and the battery 14 may be fixed to the first shell 111, in the wearing state, the first shell 111 is closer to the user's ear than the second shell 112, and the circuit board 15 is fixed to the second shell 112, which is convenient to assemble the earphone 100 facilitates the disassembly and repair of the earphone 100. The circuit board 15 may be fixed to the second shell 112 of the shell assembly 10 by hot melting. Specifically, a plurality of hot melting posts may be provided on the second shell 112, and a plurality of through holes may be provided on the circuit board 15. During assembly, the through holes on the circuit board 15 may cooperate with the hot melting posts on the second shell 112, and the circuit board 15 may be fixed to the second shell through hot melting.

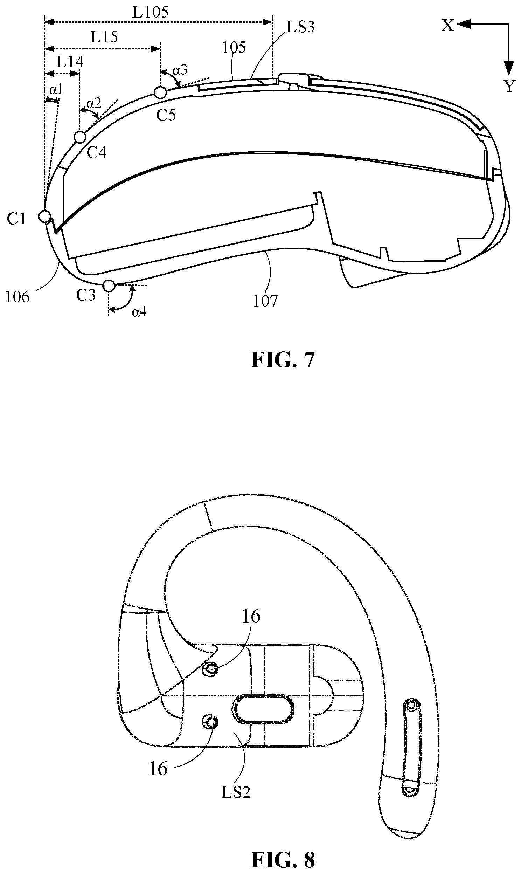

See FIG. 5 and FIG. 8, the earphone 100 further includes a charging interface 16 disposed on the first shell 111, and a magnetic suction element 17 disposed between the battery 14 and the first shell 111 along the second axis direction ZX2. Disposing the magnetic suction element 17 between the battery 14 and the first shell 111 can make full use of the accommodation space 101 and increase the space utilization rate. In this case, the earphone 100 may be used with a charging box 900 having a magnetic charging function.

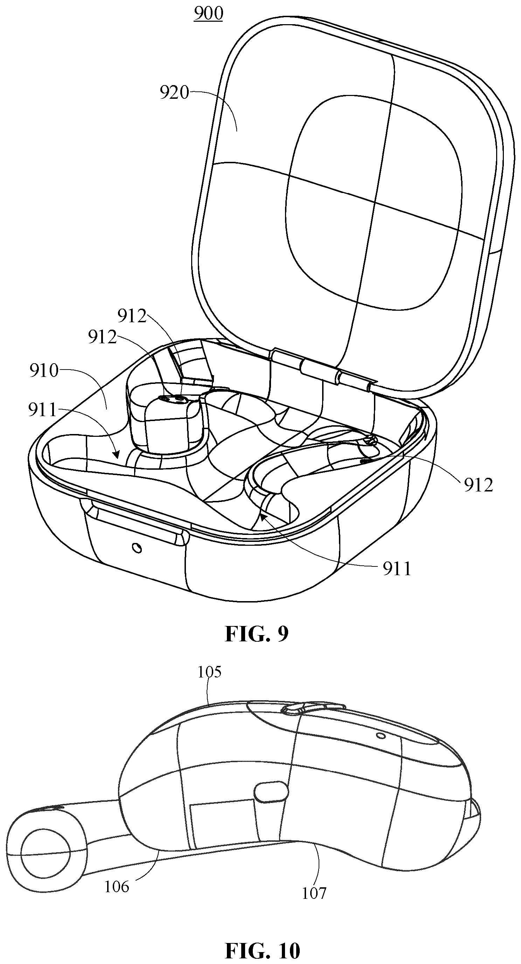

See FIG. 9, the charging box 900 may include a lower shell assembly 910 and an upper shell assembly 920. The lower shell assembly 910 may be provided with two profiling recesses 911 for accommodating the earphones 100, respectively, and the upper shell assembly 920 may cover the lower shell assembly 910 to close the profiling recesses 911.

Further, the charging box 900 may include a main control circuit board provided within the lower shell assembly 910 and electrode terminals 912 provided on the main control circuit board. The electrode terminals 912 may be provided in a plurality of sets, such as two sets, as required. The electrode terminals 912 may be exposed in the profiling recesses 911, and when any one of the earphones 100 is put into the charging box 900, the charging interface 16 in the earphone 100 may be in one-to-one contact with the electrode terminals 912 in the charging box 900 to meet the requirements of charging, detecting, and other functions. Correspondingly, the electrode terminals 912 may include a power positive terminal and a power negative terminal, and may further include a detection terminal; the connections between any two of the terminals may form a triangle, such as an equilateral triangle, or the terminals may be arranged in a spaced manner along a straight line, for example, spaced apart and collinear.

Alternatively, the charging box 900 may include a magnetic suction structure (not shown in the figures) provided within the lower shell assembly 910. The magnetic suction structure may be provided in a plurality of sets, such as two sets, as required. After any of the earphones 100 is placed into the profiling recesses 911, the magnetic suction structure and the magnetic suction element 17 within the earphone 100 may form a magnetic suction pairing to make the charging interface 16 and the electrode terminals 912 in one-to-one contact.

When the earphone 100 is in the wearing state, the first end 102 of the shell assembly 10 may need to extend into the user's concha cavity 502. If the shape of the outer wall surface LS3 of the first end 102 of the shell assembly 10 away from the user's ear cannot fit well with the concha cavity 502, the earphone 100 may increase the foreign body sensation of the user during wearing, resulting in a poor experience.

In some embodiments, the first direction X has a positive direction pointing from the second end 103 to the first end 102, and an outer wall surface LS3 of the shell assembly 10 that is away from the user's ear when the earphone is in the wearing state may include a first arcuate transition region 105. On the reference plane defined by the first direction X and the second direction Y, the first arcuate transition region 105 gradually approaches the user's ear along the positive direction of the first direction X, forming a first portion of the first end 102. In such cases, an outer surface of the shell assembly 10 gradually bends towards the user's ear, which can better adapt to the shape of the concha cavity 502, and reduce the foreign body sensation when worn by the user.

Referring to FIG. 7, the radius of curvature of the first arcuate transition region 105 gradually reduces along the positive direction of the first direction X. In this case, the first curved transition region has a larger radius of curvature on a side away from the user's ear, which can be favorable for arranging elements inside the shell assembly 10.

Considering that when the loudspeaker 13 and the battery 14 are arranged at an inclined angle, if the extension length of the first arcuate transition region 105 along the first direction X is too small, the size of a portion of the shell assembly 10 along the thickness direction may be relatively large, which reduces the utilization of the internal space of the shell assembly 10. In some embodiments, an extension length L105 of the first arcuate transition region 105 along the first direction X is not less than 16 mm. In such cases, the thickness of the shell assembly 10 at various locations can be within a reasonable range, and the utilization of the internal space of the shell assembly 10 can be improved.

As described above, along the first direction X, the first end 102 has the first reference point C1 that is farthest away from the second end 103, and the first reference point C1 has been described above and will not be repeated herein. An angle α1 between the tangent line of the first arcuate transition region 105 and the second direction Y at the first reference point C1 may be in a range from 5 degrees and 8 degrees. For example, the angle α1 between the first arcuate transition region 105 and the second direction Y at the first reference point C1 is 5 degrees, 5.5 degrees, 6 degrees, 6.5 degrees, 7 degrees, 7.5 degrees, or 8 degrees. In some embodiments, see FIG.7 and FIG. 10, the first arcuate transition region 105 further has a first intermediate reference point C4 whose distance L14 from the first reference point C1 along the first direction X is in a range from 1.8 mm and 3 mm. At the first intermediate reference point C4, an angle α2 between the tangent line of the first arcuate transition region 105 and the second direction Y is in a range from 35 degrees and 53 degrees. In some embodiments, the first arcuate transition region 105 has a second intermediate reference point C5 whose distance L15 from the first reference point C1 along the first direction X is in a range from 6 mm and 9 mm. At the second intermediate reference point C5, an angle α3 between the tangent line of the first arcuate transition region 105 and the second direction Y is in a range from 60 degrees and 80 degrees.

As mentioned above, by sequentially limiting the shapes of the first arcuate transition region 105 at the first reference point C1, the first intermediate reference point C4, and the second intermediate reference point C5, the first arcuate transition region 105 can effectively adapt to the shape of the user's concha cavity 502.

In some specific embodiments, the distance L14 between the first intermediate reference point C4 and the first reference point C1 along the first direction X is 2.35 mm. At the first intermediate reference point C4, the angle α2 between the tangent line of the first arcuate transition region 105 and the second direction Y is 43.91 degrees. The distance L14 between the second intermediate reference point C5 and the first reference point C1 along the first direction X is 7.43 mm, and the angle α3 between the tangent line of the first arcuate transition region 105 and the second direction Y at the second intermediate reference point C5 is 70.8 degrees.

In some embodiments, along the second direction Y, a side of the shell assembly 10 facing the user's ear has a third reference point C3 that is adjacent to the first end 102 and closest to the user's ear, the outer wall surface LS2 of the shell assembly 10 facing the user's ear has a second arcuate transition region 106 located between the first reference point C1 and the third reference point C3, and the first direction X has a negative direction pointing from the first end 102 to the second end 103. Along the negative direction of the first direction X, the second arcuate transition region 106 gradually approaches the user's ear, forming a second portion of the first end 102. Optionally, the radius of curvature of the second arcuate transition region 106 gradually increases along the negative direction of the first direction X and gradually approaches the user's ear, thereby forming a second portion of the first end 102.

In the above manner, the shape of the first end 102 can fit the shape of the interior of the concha cavity more closely, reducing the foreign body sensation when the first end 102 extends into the concha cavity 502, and improving the wearing experience of the user.

In some embodiments, the distance L13 between the third reference point C3 and the first reference point C1 along the first direction X is in a range from 3 mm and 6 mm. Optionally, at the third reference point C3, an angle α4 between the tangent line of the second arcuate transition region 106 and the second direction Y is in a range from 75 degrees and 95 degrees.

In some specific embodiments, the distance L13 between the third reference point C3 and the first reference point C1 along the first direction X is 4.29 mm, and the angle α4 between the tangent line of the second arcuate transition region 106 and the second direction Y at the third reference point C3 is 84.9 degrees.

In such cases, by limiting the projection length between the third reference point C3 and the first reference point C1 along the first direction X, the projection length between the third reference point C3 and the first reference point C1 along the second direction Y, and the slope of the second arcuate transition region 106 between the third reference point C3 and the first reference point C1, the second arcuate transition region 106 can be better adapted to the interior of the concha cavity 502 and reduce foreign body sensation.

Further, the outer wall surface LS2 of the shell assembly 10 facing the user's ear includes a third arcuate transition region 107 located on a side of the third reference point C3 that is away from the first reference point C1, and the third arcuate transition region 107 is configured in an arch shape away from the user's ear. Along the first direction X, the distance L10 between the apex G1 of the third arcuate transition region 107 and the first reference point C1 along the first direction X is in a range from 15 mm to 18 mm, and a distance H10 between the apex G1 of the third arcuate transition region 107 and the first reference point C1 along the second direction Y is in a range from 1 mm to 3 mm.

In some specific embodiments, the distance L10 between the apex G1 of the third arcuate transition region 107 and the first reference point C1 along the first direction X is 17.7 mm, and the distance H10 between the apex G1 of the third arcuate transition region 107 and the first reference point C1 along the second direction Y is 1.91 mm. In this case, the apex G1 of the third arcuate transition region 107 is located substantially outside the tragus 508 of the user when the earphone 100 is in the wearing state, which can reduce the possibility of compressing the tragus 508.

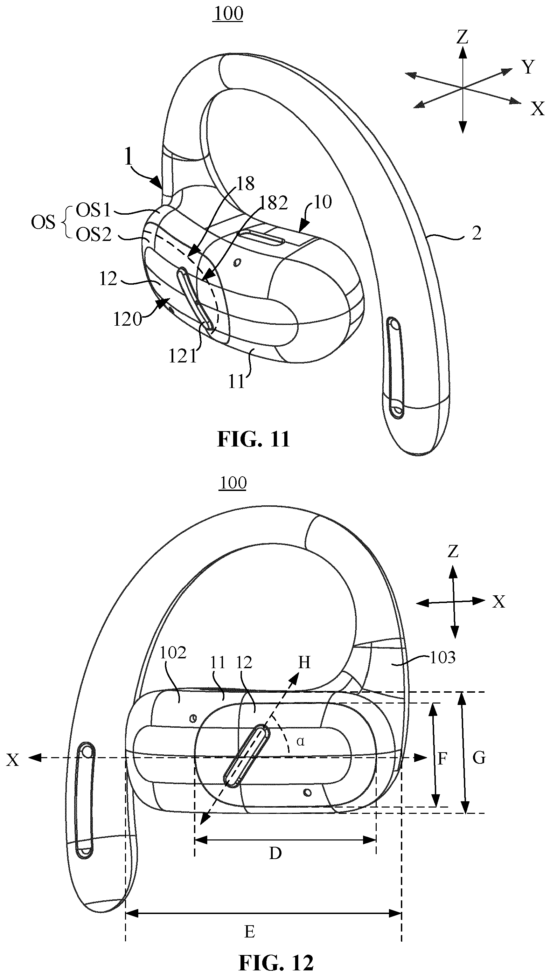

As shown in FIG. 11, and as described above, the core module 1 may include the shell assembly 10. The core module 1 may also include the loudspeaker 13 and the battery 14, etc., as mentioned above.

Optionally, the shell assembly 10 may include an outer shell 11 and a decorative cover 12, as shown in FIG. 11. The outer shell 11 includes an outer surface away from the user's ear in a wearing state, and the decorative cover 12 is provided on the outer surface OS1 of the outer shell 11 and is configured to form a touch positioning region 120 for the user to perform touch positioning. The core module 1 may further include a touch module 18. The touch module 18 may be disposed in the outer shell 11 and includes a touch detection region 182 that at least partially overlaps the touch positioning region 120. When the user touches the corresponding region on the decorative cover 12, it can be detected by the touch detection region 182.

The touch positioning region 120 may be used to position the touch detection region 182. The user, upon sensing the touch positioning region 120, can generally know that a region available for touch operation has been reached or is close. The touch detection region 182 may detect a touch operation of the user. The touch module 18 may detect the user's touch operation through the touch detection region 182, thereby realizing touch sensing to enable the earphone 100 to realize the human-computer interaction function with the user. For example, functions such as volume adjustment, on/off control, song switching, play, and pause can be realized, and operations such as Bluetooth connecting or disconnecting operations, switching Bluetooth-connected devices, or the like can also be realized.

Further, the outer shell 11 and/or the decorative cover 12 may be provided with a positioning protrusion 121, the positioning protrusion 121 being located within the touch positioning region 120 and protruding from the outer surface OS1 of the decorative cover 12 that is away from the outer shell 11. Based on the touch positioning region 120 providing a first touch navigation positioning, setting the positioning protrusion 121 to protrude from the outer surface OS1 of the decorative cover 12 that is away from the outer shell 11 facilitates the user to touch the positioning protrusion 121 when touching the outer shell 11, so that the positioning protrusion 121 can provide a second touch navigation positioning based on the decorative cover 12 to facilitate the user to more accurately locate the touch detection region 182 by touching the positioning protrusion 121, improving the convenience of touch operation. Moreover, the decorative cover 12 can bring a decorative unique visual effect to the earphone 100, and compounding (at least partially overlapping) with the touch detection region 182 based on the unique visual effect can eliminate the need to additionally set up a detection region for touch, making the earphone 100 smaller in size. Due to the visual effect of the decorative cover 12, it is also easy for the user to be aware of the location of the touch detection region 182, reducing the user's learning cost and improving the user's convenience of touch operation.

In some embodiments, as shown in FIG. 11, the outer surface OS 1 of the outer shell 11 and an outer surface OS2 of the decorative cover 12 may together form an outer surface OS of the core module 1. The outer surface OS of the core module 1 is outwardly arch-shaped. In other words, the outer surface OS 1 of the outer shell 11 and the outer surface OS2 of the decorative cover 12 are together outwardly arch-shaped, so that the lateral space utilization of the earphone 100 can be increased to dispose other components inside the shell assembly 10, and the outwardly arch-shaped configuration can visually miniaturize the core module 1 on the outer surface OS.

In some embodiments, the first direction X and the second direction Y of the shell assembly 10 are likewise the first direction X and the second direction Y of the outer shell 11, as shown in FIG. 11. The outer shell 11 has a length direction X, a width direction Z, and a thickness direction Y that are perpendicular to each other, and the outer shell 11 is configured to be stacked on the user's ear along the thickness direction Y in the wearing state. Specifically, the length direction X of the outer shell 11 may be as shown by the X arrow in FIG. 11, the thickness direction Y of the outer shell 11 may be as shown by the Y arrow in FIG. 11, and the width direction Z of the outer shell 11 may be as shown by the Z arrow in FIG. 11, the direction X, the direction Y, and the direction Z being perpendicular to each other.

In some embodiments, as shown in FIG. 12, the ratio of the dimension of the decorative cover 12 to the dimension of the outer shell 11 along the length direction X may be greater than or equal to 0.5 and less than or equal to 0.8. The dimension of the decorative cover 12 along the length direction X may be as shown as a length D in FIG. 12, and the dimension of the outer shell 11 along the length direction X may be as shown as a length E in FIG. 12, where 0.5≤D/E≤0.8. For example, the ratio of the dimension of the decorative cover 12 to the dimension of the outer shell 11 along the length direction X may be 0.6, or 0.7, or the like. For example, the ratio of the dimension of the decorative cover 12 to the dimension of the outer shell 11 along the length direction X is greater than or equal to 0.6 and less than or equal to 0.7.

Optionally, the ratio of the dimension of the decorative cover 12 to the dimension of the outer shell 11 along the width direction Z may be greater than or equal to 0.6 and less than or equal to 0.95. The dimension of the decorative cover 12 along the width direction Z may be as shown as a length F in FIG. 12, and the dimension of the outer shell 11 along the width direction Z may be as shown as a length G in FIG. 12, where 0.6≤F:G≤0.95. For example, the ratio of the dimension of the decorative cover 12 and the outer shell 11 along the width direction Z may be 0.65, or 0.75, etc. For example, the ratio of the dimension of the decorative cover 12 to the dimension of the outer shell 11 along the width direction Z is greater than or equal to 0.7 and less than or equal to 0.87.

Setting the ratio of the dimension of the decorative cover 12 to the dimension of the outer shell 11 in this way can enable the decorative cover 12 to occupy a larger proportion of the outer surface OS1 of the outer shell 11, so that the decorative cover 12 can be easily touched by the user when touching the outer surface OS1 of the outer shell 11.

It should be appreciated that in other embodiments, the ratio of the dimension of the decorative cover 12 to the dimension of the outer shell 11 may be other values, for example, the ratio of the dimension of the decorative cover 12 to the dimension of the outer shell 11 along the length direction X may be greater than or equal to 0.3 and less than or equal to 0.8, and the ratio of the dimension of the decorative cover 12 to the dimension of the outer shell 11 along the width direction Z may be greater than or equal to 0.4 and less than or equal to 0.9, which will not be specifically enumerated herein in this embodiment.

In some embodiments, as shown in FIG. 12, the positioning protrusion 121 may be configured as a strip, with an extension direction H of the positioning protrusion 121 intersecting with the length direction X and the width direction Z, respectively. The extension direction H of the positioning protrusion 121 may be as shown by the H arrow in FIG. 12. This setting enables the positioning protrusion, which intersects the length direction X and the width direction Z, respectively, to provide the user with an obvious tactile sensation when the user's hand is touching, which facilitates the user's touch positioning and provides a more obvious secondary touch navigation localization for the user.

Optionally, the extension direction H of the positioning protrusion 121 is not parallel to either the length direction X or the width direction Z of the outer shell 11, and may intersect the length direction X of the outer shell 11 and form an acute angle with the length direction X. An angle α between the extension direction H of the positioning protrusion 121 and the length direction X of the outer shell 11 is shown in FIG. 12.

Optionally, the angle between the extension direction H of the positioning protrusion 121 and the length direction X of the outer shell 11 may be in a range from 30 degrees to 70 degrees, e.g., the angle between the extension direction H of the positioning protrusion 121 and the length direction X of the outer shell 11 may be an angle of 40 degrees, 50 degrees, 60 degrees, or the like. Setting up in this way can make the positioning protrusion 121 easy to be touched and recognized by a user.

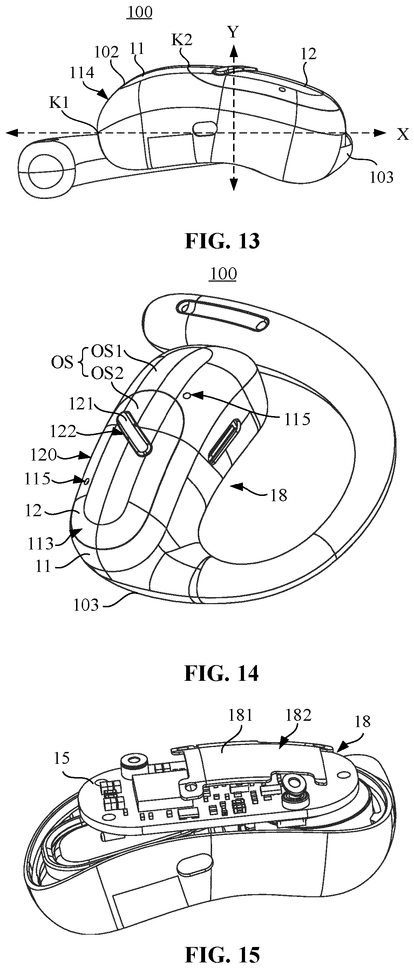

In some embodiments, as shown in FIGs. 12 and 14, the outer shell 11 may include the connection end 103 (also referred to as the second end 103 in some descriptions of the present disclosure) connected to the ear hook 2 and the free end 102 (also referred to as the first end 102 in some descriptions of the present disclosure) that is away from the connection end 103 along the length direction X. The outer shell 11 may be bent along the thickness direction Y toward the direction in which the outer surface OS1 faces, such that the free end 102 is closer to the user's ear hole than the connection end 103, and the decorative cover 12 is closer to the connection end 103. Since the free end 102 is closer to the ear and the connection end 103 connected to the ear hook 2 is farther away from the ear when the earphone 100 is worn by the ear, the decorative cover 12 is arranged closer to the connection end 103, which is convenient for the user to touch the decorative cover 12.

In some embodiments, as shown in FIG. 13 to FIG. 14, the outer shell 11 may be bent along the thickness direction Y toward the direction in which the outer surface OS1 of the outer shell 11 faces, so that the free end 102 is closer to the ear hole of the user's ear compared to the connection end 103. With this configuration, the decorative cover 12 can be located, as much as possible, in a region parallel to the sagittal plane of the human body when the earphone 100 is worn, and as little as possible in the bent surface region extending toward the ear hole, which facilitates blind operation by the user and enables quick positioning of the positioning protrusion 121.

In some embodiments, as shown in FIG. 13, the free end 102 may include a first reference position K1 that is farthest away from the connection end 103 along the length direction X, and the decorative cover 12 may include a second reference position K2 that is closest to the first reference position K1 along the length direction X. The free end 102 may extend at least partially into the concha cavity 502 in the wearing state.

The outer shell 11 includes an arcuate transition region 114 between the first reference position K1 and the second reference position K2. From the second reference position K2 to the first reference position K1, the arcuate transition region 114 is progressively closer to the user's ear along the thickness direction Y in the wearing state. As a result, when the earphone 100 is in the wearing state, a portion of the earphone 100 corresponding to the arcuate transition region 114 can gradually approach the user's ear or even fit to the user's ear along the thickness direction Y, thereby facilitating the extension of the free end 102 better into the concha cavity 502, improving the wearing comfort and stability of the earphone 100. Moreover, the arcuate transition region 114 starts from the second reference position K2 on the decorative cover 12 and gradually inclines in an arc toward the first reference position K1 such that the second reference position K2 may serve as a turning point that helps the user more effectively locate the decorative cover 12, thereby locating the touch positioning region 120 and enhancing the ease of touch interaction. In addition, the edge of the decorative cover 12 is close to the curve transition boundary of the outer shell 11, making it easier for users to identify and locate the decorative cover 12 during blind operation.

In some embodiments, the roughness of the outer surface OS2 of the decorative cover 12 may be greater than the roughness of the outer surface OS1 of the outer shell 11. When the user touches the decorative cover 12 and the outer surface OS1 of the outer shell 11, the difference in roughness can bring a difference in touch to the user, thereby enabling easy distinction between the decorative cover 12 and the outer shell 11. As a result, the user can more easily locate the touch detection region 182 for touch input, improving the convenience of operation.

In some embodiments, the color of the outer surface OS2 of the decorative cover 12 is different from the color of the outer surface OS1 of the outer shell 11. For example, the color of the outer surface OS2 of the decorative cover 12 may be red, blue, etc., and the color of the outer surface OS1 of the outer shell 11 may be white, black, etc., to allow the user to differentiate between the decorative cover 12 and the outer shell from the appearance. Setting the color of the outer surface OS2 of the decorative cover 12 to be different from the color of the outer surface OS1 of the outer shell 11 to produce a color difference on the outer surface OS of the core module 1 can visually make the core module 1 smaller in size, thereby enhancing the visual effect of the earphone 100 and visually minimizing the earphone 100. Moreover, the color difference of the decorative cover 12 can enable visual positioning of the touch detection region 182, enabling the user to conveniently know the location of the touch detection region 182, reducing the cost of learning, and improving the efficiency of touch control.

In some embodiments, the material of the decorative cover 12 may be different from the material of the outer shell 11. For example, the material of the decorative cover 12 may be a transparent acrylic sheet, and the material of the outer shell 11 may be metal. Or, the material of the decorative cover 12 may be metal, and the material of the outer shell 11 may be prepared from a material such as plastic, resin, or the like. The material of the decorative cover 12 being different from the material of the outer shell 11 can also make it easier for users to distinguish between the decorative cover 12 and the outer shell 11, and the difference in materials can bring differentiated touch texture for the user, which is more convenient for the user's touch operation and improves the convenience of touch.

In some embodiments, at least a portion of the edge of the decorative cover 12 may be exposed to the outer surface OS1 of the outer shell 11 to enclose the touch positioning region 120, as illustrated in FIG. 14. The touch positioning region 120 may be enclosed by at least a portion of the edge of the decorative cover 12 exposed to the outer surface OS1 of the outer shell 11. The user may touch the at least the portion of the edge of the decorative cover 12 when touching at the outer surface OS1 of the outer shell 11, and the presence of the edge provides tactile feedback, allowing the user to perceive that the corresponding region has been touched, thereby serving as an effective means of navigation and positioning.

Optionally, the edge of the decorative cover 12 may be configured as a ring and is completely exposed to the outer surface OS1 of the outer shell 11 to enclose the touch positioning region 120. The edge of the decorative cover 12 surrounds the positioning protrusion 121. In other words, the edge of the decorative cover 12 is all exposed to the outer surface OS1 of the outer shell 11, so the user can touch the complete edge of the decorative cover 12, which enhances the positioning effect and further improves the user's touch efficiency. Additionally, the positioning protrusion 121 is provided in the middle position of the decorative cover 12 and is not close to the edge of the decorative cover 12, so as to make the positioning protrusion 121 more stable and not easy to detach from the touch positioning region 120 enclosed by the decorative cover 12.

In some embodiments, as shown in FIG. 14, the outer shell 11 may be provided with a positioning groove 113 on the outer surface, and the decorative cover 12 is accommodated in the positioning groove 113 through a groove opening of the positioning groove 113.

Optionally, the shapes and sizes of the positioning groove 113 and the decorative cover 12 may be matched to facilitate the assembly of the decorative cover 12 in the positioning groove 113 of the outer shell 11, which allows for a more even seam between the two, providing a more delicate and softer touch for the user.

Optionally, a seam between the edge of the decorative cover 12 and the edge of the groove opening of the positioning groove 113 is exposed to the outer surface, and the seam surrounds the positioning protrusion 121. The seam is formed between the edge of the decorative cover 12 and the edge of the groove opening of the positioning groove 113, which can provide a differentiated tactile sensation, and the user can perceive that the corresponding region has been touched, thereby improving the touch efficiency.

In some embodiments, the positioning protrusion 121 may protrude from the outer surface OS1 of the outer shell 11, the decorative cover 12 is provided with a positioning hole 122, and the positioning protrusion 121 passes through the positioning hole 122. Through the positioning hole 122 and the positioning protrusion 121, the decorative cover 12 and the outer surface OS1 of the outer shell 11 can be accurately assembled, enabling a more accurate position of the touch detection region 182. Furthermore, through the cooperation of the positioning groove 113 and the positioning protrusion 121, the assembly accuracy between the decorative cover 12 and the outer shell 11 can be further enhanced, and the touch positioning region 120 can be positioned more accurately for the touch detection region 182, thereby improving the accuracy and convenience of touch control.

Optionally, the positioning protrusion 121 may protrude from the outer surface OS2 of the decorative cover 12 and be integrally molded with the decorative cover 12, so that the positioning protrusion 121 can be made more stable and less likely to detach from the decorative cover 12. Further, the relative position between the positioning protrusion 121 and the touch positioning region 120 remains fixed, allowing the user to achieve accurate primary and secondary touch-based navigation and positioning.

Optionally, at least two sound pickup holes 115 may be provided on the outer surface OS of the core module 1. The two sound pickup holes 115 may be located on two opposite slopes of the outer surface OS of the core module 1, respectively. Setting the two sound pickup holes 115 on two opposite slopes can enable the two sound pickup holes 115 to point in different directions, which expands the range of sound pickup of the earphone 100, and pointing in different directions can minimize mutual interference between the two sound pickup holes 115.

In some embodiments, the positioning protrusion 121 may be configured as a strip, with the two sound pickup holes 115 located on two sides of the positioning protrusion 121, respectively. Setting the two sound pickup holes 115 on two sides of the positioning protrusion 121, respectively, can minimize the interference between the two sound pickup holes 115.

The positional relationship between the touch detection region 182 and the positioning protrusion 121 may be in various manners.

Manner 1: Optionally, the touch detection region 182 may enclose the positioning protrusion 121 to enable a user to accurately locate and confirm the position of the touch detection region 182 by touching the positioning protrusion 121, which enables the user, when using the earphone 100, to quickly and accurately locate the position of the touch detection region 182, thereby optimizing the user experience.

Manner 2: The touch detection region 182 may be closer to the connection end 103 compared to the positioning protrusion 121, so that the user can sense and trigger the touch detection region 182. Or, the touch detection region 182 may surround the positioning protrusion 121 so that the user may precisely locate the touch detection region 182 and trigger the touch module 18 through the positioning protrusion 121.

In some embodiments, as shown in FIG. 15 to FIG. 16, the touch module 18 may include a touch metal pattern 181 and a circuit board 15, the circuit board 15 may be disposed inside the outer shell 11, and the touch metal pattern 181 may be disposed inside the outer shell 11 or sandwiched between the decorative cover 12 and the outer shell 11. The touch metal pattern 181 is electrically connected to the circuit board 15, and the touch metal pattern 181 is configured to form the touch detection region 182.

When the user touches and/or presses the touch positioning region 120 or the positioning protrusion 121, the touch metal pattern 181, which forms the touch detection region 182, may be triggered. The touch metal pattern 181 thus generates a corresponding signal and transmits the signal to the circuit board 15 to further initiate a response of other functions.

In some embodiments, the touch metal pattern 181 may also be configured as a radio frequency (RF) antenna of the earphone 100. The earphone 100 may receive and transmit RF signals through the touch metal pattern 181, so the functions of the earphone 100 can be extended and enriched to facilitate the earphone 100 to generate information interaction with other devices.

It should be understood that there may be at least one sound pickup hole 115. The sound pickup hole 115 at least passes through the outer shell 11, and the accommodation space 101 is in flow communication with the external environment through the sound pickup hole 115. Correspondingly, the core module 1 may further include a microphone 19. The microphone 19 is disposed in the accommodation space 101 and corresponds to the sound pickup hole 115 to pick up sound from the external environment through the sound pickup hole 115.

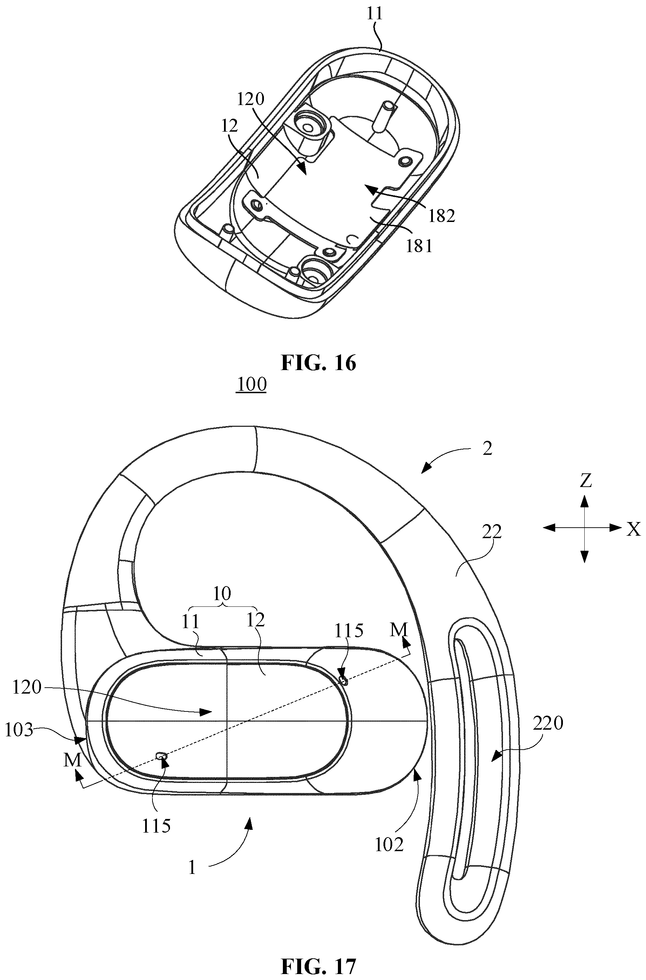

Optionally, as shown in FIGs. 17 to 20, the core module 1 may be provided with at least two sound pickup holes 115 connecting the accommodation space 101 and the external environment. The core module 1 may further include at least two microphones 19, the at least two microphones 19 being spaced apart in the accommodation space 101, and corresponding to the at least two sound pickup holes 115 one by one. Taking the two microphones 19 as an example, one of the sound pickup holes 115 may pass through the outer shell 11 and be located at the periphery of the decorative cover 12. The other one of the sound pickup holes 115 may pass through both the outer shell 11 and the decorative cover 12, that is, the sound pickup hole 115 is located within the range enclosed by the edge of the decorative cover 12. Correspondingly, the accommodation space 101 may be provided with two microphones 19, corresponding to the two sound pickup holes 115 one by one.

By providing the at least two sound pickup holes 115, the pickup range can be enlarged and the pickup quality can be improved. One of the sound pickup holes is disposed on the decorative cover 12, and the other one of the sound pickup holes is disposed outside the decorative cover 12, which can reduce the probability of blocking both of them when touching the decorative cover 12, and thus reduce the impact on the sound picking effect.

Optionally, taking the two sound pickup holes 115 as an example, the distance between the two sound pickup holes 115 is greater than or equal to the dimension of the decorative cover 12 along the arrangement direction of the two microphones 19. In such cases, since one of the sound pickup holes 115 is disposed outside the decorative cover 12, the other one of the sound pickup holes 115 can be located at the edge of the decorative cover 12, so that the distance between the two sound pickup holes 115 is relatively large. In this way, the sound pickup hole 115 located outside the decorative cover 12 is not easily blocked when the touching positioning region 120 of the decorative cover 12 is touched, and the sound pickup hole 115 located close to the edge of the decorative cover 12 is not easily blocked as well, which can further minimize the probability of blocking the two sound pickup holes 115 at the same time when touching the decorative cover 12, and thus reduce the impact on the sound pickup effect.

Optionally, as shown in FIG. 17, the touch positioning region 120 is located between the two sound pickup holes 115. Set up in this way, it is not easy to block the two sound pickup holes 115 when touching the touch positioning region 120, which reduces the impact on the sound pickup effect.

Optionally, the arrangement direction of the two sound pickup holes 115 intersects the length direction X and the width direction Z of the outer shell 11, respectively. The sound pickup hole 115 that passes through the decorative cover 12 (i.e., the sound pickup hole 115 located within the range enclosed by the decorative cover 12) is closer to the connection end 103 and closer to the edge of the decorative cover 12 that is away from the ear hook 2 along the width direction Z, compared to the sound pickup hole 115 located at the periphery of the decorative cover 12. The sound pickup hole 115 is disposed toward the lower left side, which, on the one hand, allows the sound pickup hole 115 that passes through the decorative cover 12 to be closer to the user's mouth and the loudspeaker 13, facilitating clearer capture of the user's voice and the sound from the loudspeaker 13, thereby enabling more effective noise reduction processing and improving the pickup quality of ambient sounds. On the other hand, the sound pickup hole 115 is closer to the edge of the decorative cover 12 that is away from the ear hook 2 along the width direction Z, which reduces the probability of the sound pickup hole 115 being blocked when the decorative cover 12 is touched.

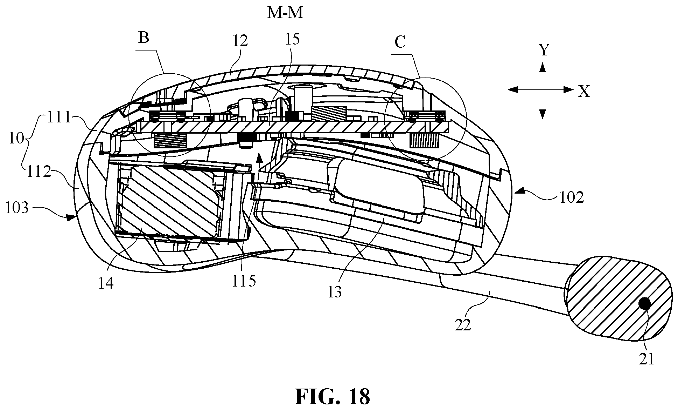

Optionally, as shown in FIGs. 18 to 20, the core module 1 may further include a sealing component 190, at least a portion of the sealing component 190 being disposed between the outer shell 11 and the microphone 19 for isolating a sound pickup path from the accommodation space 101, such that the sound pickup path is sealed relative to the accommodation space 101 located outside the sound pickup path, which helps prevent dust, moisture, and other contaminants from affecting other electronic components in the accommodation space 101 after entering through the sound pickup hole 115 into the sound pickup path.

Optionally, the core module 1 may further include a fixing plate for fixing the microphone 19. Optionally, the fixing plate may be the circuit board 15. Or, in other embodiments, the fixing plate may be a board-like structural member other than the circuit board 15, or a portion of the shell assembly 10, which may be used to fix the microphone 19, and may further fix other components.

As shown in FIGs. 18 to 20, the fixing plate is accommodated in the accommodation space 101 and includes a through hole 151, and the microphone 19 is fixed to one side of the fixing plate and covers the through hole 151. At least a portion of the sealing component 190 is disposed in the accommodation space 101 and abuts between the outer shell 11 and a side of the fixing plate away from the microphone 19, and enables the through hole 151 and the sound pickup hole 115 to be in flow communication with each other. Such a setting can improve the stability and sealing performance of the sealing component 190.

There are a variety of mating configurations for the sealing component 190 with the outer shell 11, etc., which can be tailored to different mounting configurations or different locations of the microphone 19.

In some embodiments, for the sound pickup hole 115 that passes through the outer shell 11 and is located at the periphery of the decorative cover 12, an exemplary structure of the sealing component 190 and relevant descriptions are as follows.

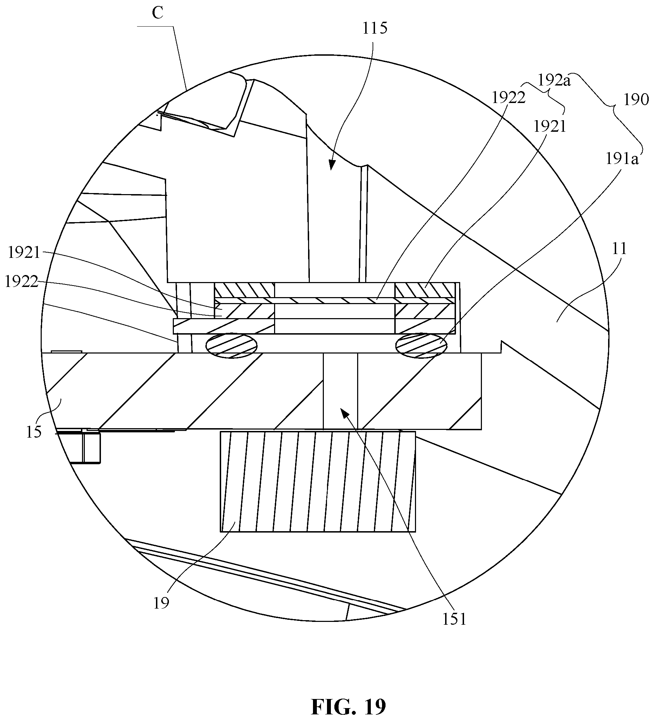

As shown in FIGs. 18 and 19, the microphone 19 may pass through the outer shell 11 and be located at the periphery of the decorative cover 12. The sealing component 190 may include a sealing gasket 191a and a mesh component 192a, the sealing gasket 191a and the mesh component 192a being stacked and disposed in the accommodation space 101 and located between the fixing plate and the outer shell 11. Since the microphone 19 is located at the periphery of the decorative cover 12 and passes through the outer shell 11, the outer shell 11 is more monolithic and integrally formed, therefore, the sealing gasket 191a and the mesh component 192a are stacked and disposed between the fixing plate and the outer shell 11, on the one hand, the sealing effect can be better realized due to the outer shell 11 with better integrity, on the other hand, the stacking of sealing gasket 191a and the mesh component 192a can realize a thicker sealing component 190, which can be tightly disposed between the outer shell 11 and the fixing plate. Besides, the mesh component 192a can prevent dust and impurities from entering the accommodation space 101, further improving the sealing effect.

Optionally, the sealing gasket 191a is stacked on the fixing plate and is closer to the through hole 151 as compared to the mesh component 192a. The mesh component 192a is disposed between the sealing gasket 191a and the outer shell 11 and is closer to the sound pickup hole 115 compared to the sealing gasket 191a. Thus, placing the mesh component 192a in front of the sealing gasket 191a (i.e., closer to the sound pickup hole 115) can prevent dust, impurities, etc. from entering into and building up in the sealing gasket 191a, which allows dust, impurities, and moisture to be blocked at an earlier stage, thereby minimizing their entry into the accommodation space 101.

In other embodiments, for the sound pickup hole 115 that passes through the outer shell 11 and the decorative cover 12, an exemplary structure of the sealing component 190 and related descriptions are as follows.

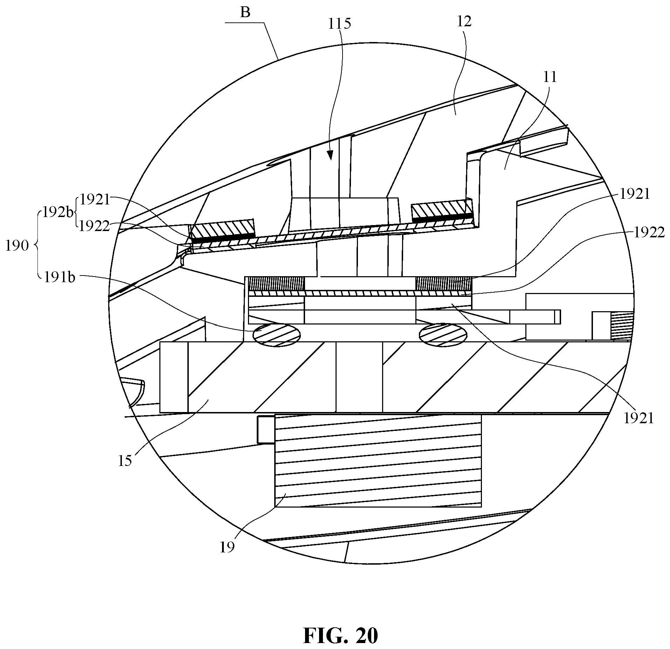

As shown in FIG. 20, the microphone 19 may pass through the outer shell 11 and the decorative cover 12, and the sealing component 190 may include a sealing gasket 191b and at least one mesh component 192b. The sealing gasket 191b is disposed in the accommodation space 101 and i between the outer shell 11 and the fixing plate, and directly abuts the outer shell 11 and the fixing plate. The at least one mesh component 192b is disposed between the outer shell 11 and the decorative cover 12. Due to the relatively large tolerance that may accumulate from the fit between the decorative cover 12 and the outer shell 11, as well as from the fit between the sealing component 190 and the fixing plate, the sealing gasket 191b with stronger deformation ability is connected to the fixing plate, which helps reduce the fit tolerance between the decorative cover 12 and the outer shell 11, and between the sealing component 190 and the fixing plate, thereby ensuring the sealing performance of the circuit components.

Optionally, the at least one mesh component 192b includes two mesh components, with one of the two mesh components 192b disposed between the outer shell 11 and the decorative cover 12, and the other one of the two mesh components 192b stacked with the sealing gasket 191b in the accommodation space 101 and disposed between the outer shell 11 and the fixing plate.

By disposing the mesh component 192b between the outer shell 11 and the decorative cover 12, on the one hand, dust, impurities, and moisture can be reduced from entering the accommodation space 101 at an earlier stage, on the other hand, the mesh component 192b also serves to seal the sound pickup hole 115 between the outer shell 11 and the decorative cover 12, thereby reducing the ingress of moisture through the sound pickup hole into the space between the outer shell 11 and the decorative cover 12, which helps maintain the stability of their connection. By disposing the sealing gasket 191b inside the accommodation space 101 and sealing between the outer shell 11 and the fixing plate, the sealing performance is further enhanced, thereby reducing the leakage of moisture and other contaminants entering through the sound pickup hole 115 into the accommodation space 101, which could otherwise adversely affect the internal electronic components.

For the mesh components 192a and 192b, the exemplary descriptions of their structure are as follows.

As shown in FIG. 19 to FIG. 20, the mesh components 192a and 192b include an annular double-sided adhesive 1921 and a mesh 1922. The annular double-sided adhesive 1921 is stacked with the mesh 1922 and bonded to the mesh 1922. Specifically, one side of the annular double-sided adhesive 1921 may be bonded to the mesh 1922, and the other side may be connected to the outer shell 11 or the decorative cover 12 close to it. For example, for the sound pickup hole that passes through the outer shell 11 and the decorative cover 115, one side of the annular double-sided adhesive 1921 may be bonded to the mesh 1922, and the other side may be bonded to the outer shell 11. As another example, for the sound pickup hole 115 that passes through the outer shell 11 and is located at the periphery of the decorative cover 12, one side of the annular double-sided adhesive 1921 may be bonded to the mesh 1922, and the other side may be bonded to the outer shell 11. The mesh 1922 may face the sound pickup hole 115 and the through hole 151 to efficiently prevent impurities, dust, or the like from entering the accommodation space 101. Specifically, the annular double-sided adhesive 1921 surrounds the periphery of the sound pickup hole 115, and a portion of the mesh 1922 disposed in the middle of the annular double-sided adhesive 1921 faces the sound pickup hole 115.

Optionally, the least one mesh component 192a includes two layers of annular double-sided adhesive 1921 and one layer of mesh 1922, and the mesh 1922 is stacked and bonded between the two layers of annular double-sided adhesive 1921. By disposing the two layers of annular double-sided adhesive 1921, it's the bonding strength of the mesh 1922 can be enhanced, the mesh 1922 can be better fixed, and the thickness of the annular double-sided adhesive 1921 can be increased, so that the annular double-sided adhesive 1921 can be more tightly sealed between the outer shell 11 and the decorative cover 12, or between the outer shell 11 and the sealing gaskets 191a and 191b, thereby improving the sealing effect.

Optionally, the at least one mesh component 192a includes two layers of annular double-sided adhesive 1921 and two layers of mesh 1922, the two layers of annular double-sided adhesive 1921 are spaced apart, one layer of the mesh 1922 is stacked and bonded between the two layers of annular double-sided adhesive 1921, and one layer of the annular double-sided adhesive 1921 is stacked between the two layers of mesh 1922. By disposing the two layers of mesh 1922, the filtration and blocking effect can be further enhanced, and by disposing the two layers of annular double-sided adhesive 1921, the two layers of mesh 1922 can be effectively fixed with an increased thickness, which can be more tightly sealed between the outer shell 11 and the decorative cover 12, or between the outer shell 11 and the sealing gaskets 191a and 191b, thereby improving the sealing effect.

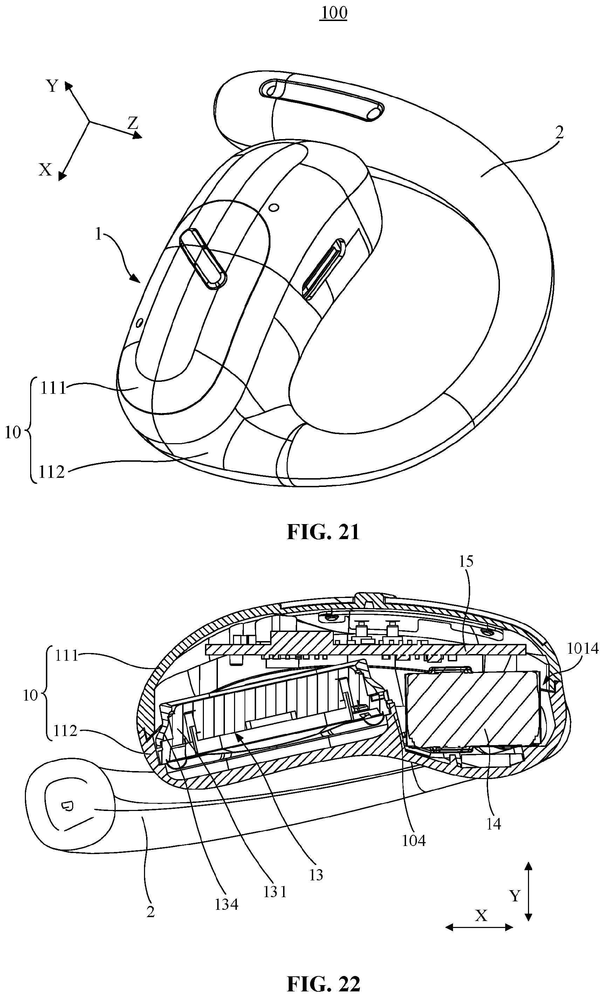

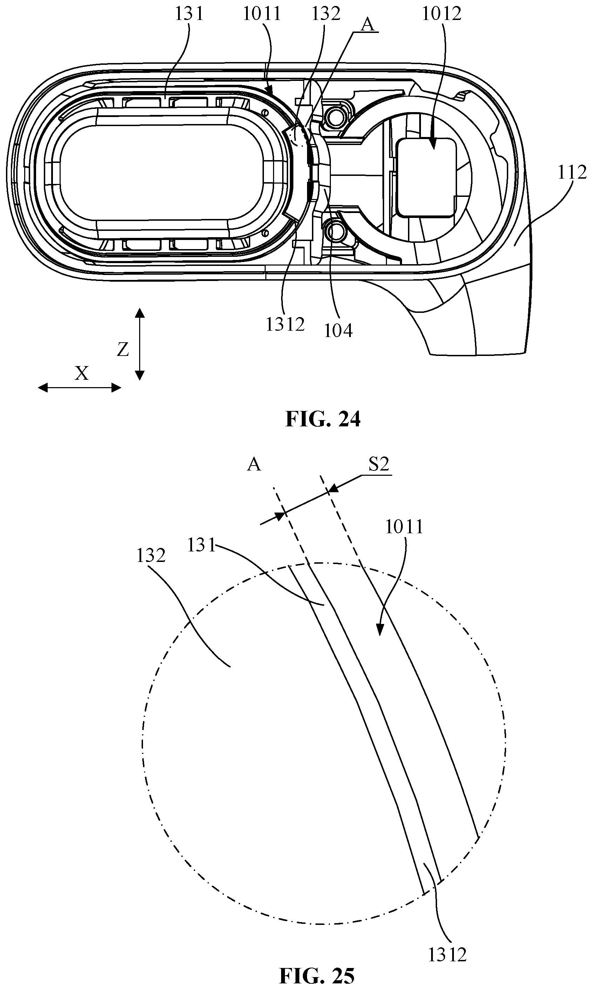

In conjunction with FIG. 21 to FIG. 23, the foregoing content has illustrated that the earphone 100 may include the shell assembly 10 and the loudspeaker 13. Optionally, the earphone 100 may further include a sealant (not shown in the figures). The shell assembly 10 is configured to form a first accommodation cavity 1011. The loudspeaker 13 includes a basket 131 and a metal pad 132. In conjunction with FIG. 24 and FIG. 25, the basket 131 is disposed in the first accommodation cavity 1011, and the metal pad 132 is disposed on the basket 131 and faces the battery 14 to ensure that the loudspeaker 13 is electrically connected to other elements. The sealant is configured to seal the gap between the outer peripheral wall of the basket 131 and the inner peripheral wall of the first accommodation cavity 1011.

By disposing the sealant to seal the gap between the outer peripheral wall of the basket 131 and the inner peripheral wall of the first accommodation cavity 1011, a seal is formed between the loudspeaker 13 and the shell assembly, thereby enhancing the sealing performance of the shell assembly 10 and reducing the risk of water ingress damaging the electronic elements.

When dispensing the sealant, it is often necessary to dispense the sealant around the basket 131, so that the sealant can be continuously filled between the outer peripheral wall of the basket 131 and the inner peripheral wall of the first accommodation cavity 1011, thereby achieving a stable and reliable sealing effect between the outer peripheral wall of the basket 131 and the inner peripheral wall of the first accommodation cavity 1011. In the prior art, the metal pad 132 is usually disposed to extend from the basket 131 to the outside of the inner peripheral wall of the first accommodation cavity 1011 to connect to the power source outside the first accommodation cavity 1011, and when dispensing the sealant, the metal pad 132 tends to significantly block the gap between the outer peripheral wall of the basket 131 and the inner peripheral wall of the first accommodation cavity 1011, making it difficult to dispense the sealant near the metal pad 132, which may lead to discontinuity of the sealant at the metal pad 132, thereby reducing the sealing reliability.

By disposing the metal pad 132 on the side of the inner peripheral wall of the first accommodation cavity 1011 facing the battery 14, and by setting the metal pad 132 to be spaced apart from the inner peripheral wall of the first accommodation cavity 1011, the gap between the outer peripheral wall of the basket 131 and the inner peripheral wall of the first accommodation cavity 1011 at the metal pad 132 during dispensing can be exposed to the outside world, thereby facilitating dispensing the sealant at the metal pad 132 and enabling the sealant to be continuously filled between the outer peripheral wall of the basket 131 and the inner peripheral wall of the first accommodation cavity 1011, thereby realizing stable and reliable sealing effect.

Further, a wire 133 may extend from the metal pad 132 to the inner peripheral wall of the first accommodation cavity 1011, the diameter of the wire 133 is much smaller than the dimension of the metal pad 132, and the gap between the outer peripheral wall of the basket 131 and the inner peripheral wall of the first accommodation cavity 1011 is less blocked by the wire 133, which is conducive to dispensing the sealant and achieving a stable and reliable sealing effect.

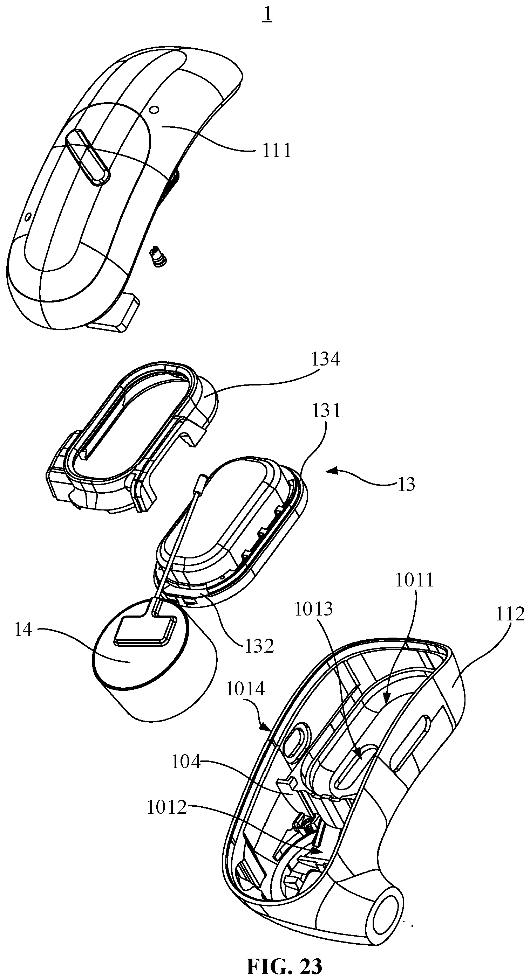

In conjunction with FIG. 23 to FIG. 25, in some embodiments, the metal pad 132 is disposed not to extend beyond the outer peripheral wall of the basket 131.

Set up in this way, during the dispensing process, the metal pad 132 may not block the gap between the outer peripheral wall of the basket 131 and the inner peripheral wall of the first accommodation cavity 1011, which facilitates dispensing the sealant and realizing a stable and reliable sealing effect.

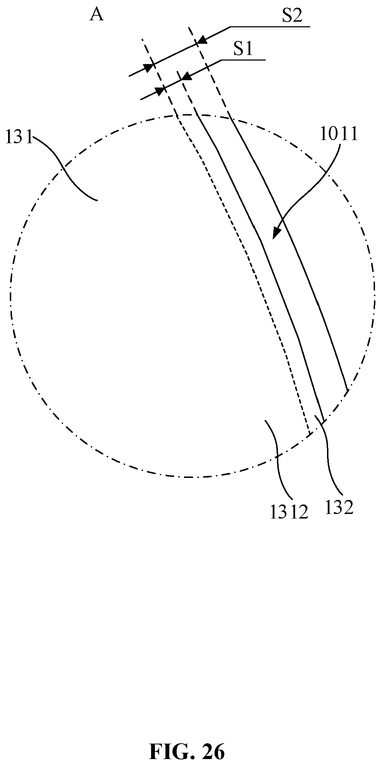

In conjunction with FIG. 23, FIG. 24, and FIG. 26, in some embodiments, the metal pad 132 is disposed to extend beyond an outer peripheral wall of the basket 131, and an excess distance S1 of the metal pad 132 relative to the outer peripheral wall of the basket 131 is not greater than one-half of a dimension S2 of the gap between the outer peripheral wall of the basket 131 and the inner peripheral wall of the first accommodation cavity 1011.

Set up in this way, during the dispensing process, the metal pad 132 may not completely block the gap between the outer peripheral wall of the basket 131 and the inner peripheral wall of the first accommodation cavity 1011, and the dispensing operation can still be performed at the metal pad 132. By setting the excess distance S1 of the metal pad 132 relative to the outer peripheral wall of the basket 131 being not greater than one-half of the dimension S2 of the gap between the outer peripheral wall of the basket 131 and the inner peripheral wall of the first accommodation cavity 1011, during the dispensing operation, the gap between the outer peripheral wall of the basket 131 and the inner peripheral wall of the first accommodation cavity 1011 at the metal pad 132 can be partially exposed to the outside world. Since the sealant has a certain mobility during dispensing, the mobility of the sealant can be utilized to make the sealant fill the gap between the outer peripheral wall of the basket 131 and the inner peripheral wall of the first accommodation cavity 1011, thereby realizing a stable and reliable sealing effect. For example, the excess distance S1 of the metal pad 132 relative to the outer peripheral wall of the basket 131 may be set to be 0.2 to 0.3 times, or 0.4 to 0.5 times, of the dimension S2 of the gap between the outer peripheral wall of the basket 131 and the inner peripheral wall of the first accommodation cavity 1011.

In some embodiments, in conjunction with FIG. 23, FIG. 27, and FIG. 28, the first accommodation cavity 1011 has an open end 1014, the basket 131 is disposed within the first accommodation cavity 1011 through the open end 1014, the metal pad 132 is disposed on one side of the basket 131 facing the open end 1014, and the earphone 100 further includes the wire 133, the wire 133 being soldered to a side of the metal pad 132 facing the open end 1014.

During the assembly process of the basket 131, the peripheral side of the basket 131 and a side of the basket 131 away from the open end 1014 may be in contact with the inner wall of the first accommodation cavity 1011, and by setting the metal pad 132 on the side of the basket 131 facing the open end 1014 and soldering the wire 133 to the side of the metal pad 132 facing the open end 1014, the interference of the metal pad 132 and the wire 133 on the assembly process can be reduced and the assembly efficiency can be improved.

In conjunction with FIG. 23 to FIG. 25, in some embodiments, the sealant is applied from the side of the open end 1014 to the gap between the outer peripheral wall of the basket 131 and the inner peripheral wall of the first accommodation cavity 1011.

The gap between the outer peripheral wall of the basket 131 and the inner peripheral wall of the first accommodation cavity 1011 may be exposed to the outside world through the open end 1014 during the dispensing process, thereby facilitating dispensing the sealant into the gap between the outer peripheral wall of the basket 131 and the inner peripheral wall of the first accommodation cavity 1011 through the open end 1014 from the outside world, such that the sealant enters the gap between the outer peripheral wall of the basket 131 and the inner peripheral wall of the first accommodation cavity 1011 from the side of the open end 1014. Set up in this way, it is convenient to perform the dispensing operation and improve the assembly efficiency.

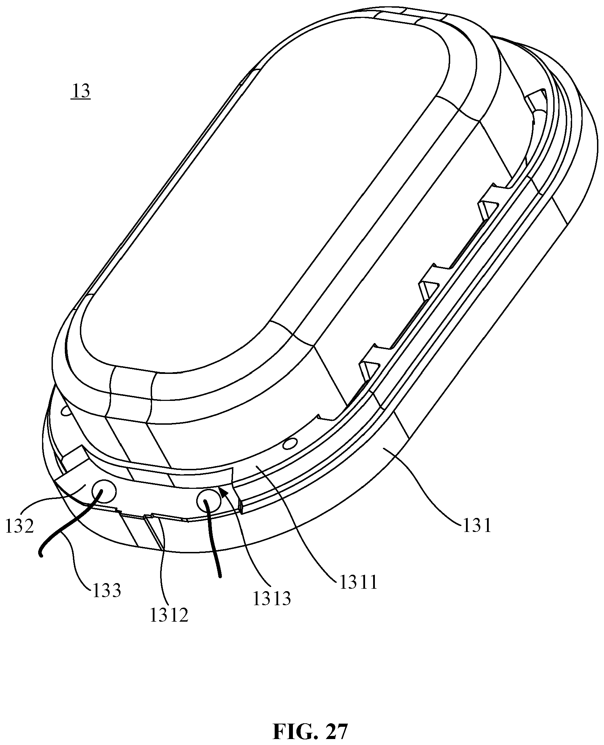

In combination with FIG. 27 to FIG. 29, in some embodiments, the earphone 100 further includes a bracket 134. The basket 131 is provided with an annular table surface 1311 facing the open end 1014 and an assembly table surface 1312, the annular table surface 1311 being disposed along a circumferential direction of the basket 131 and provided with a first notch 1313, and the assembly table surface 1312 being disposed along a circumferential direction of the basket 131 and corresponding to the first notch 1313. The metal pad 132 is disposed on the assembly table surface 1312, and the bracket 134 is supported on the annular table surface 1311.

The assembly table surface 1312 may be sunk in a direction away from the open end 1014 relative to the annular table surface 1311 at the first notch 1313. The metal pad 132 has a raised height. By providing the annular table surface 1311 with the first notch 1313, the bracket 134 can avoid the metal pad 132 as well as the wire 133 when the bracket 134 is supported on the annular table surface 1311, thereby facilitating an assembly of the bracket 134 with the basket 131 and improving assembly efficiency.

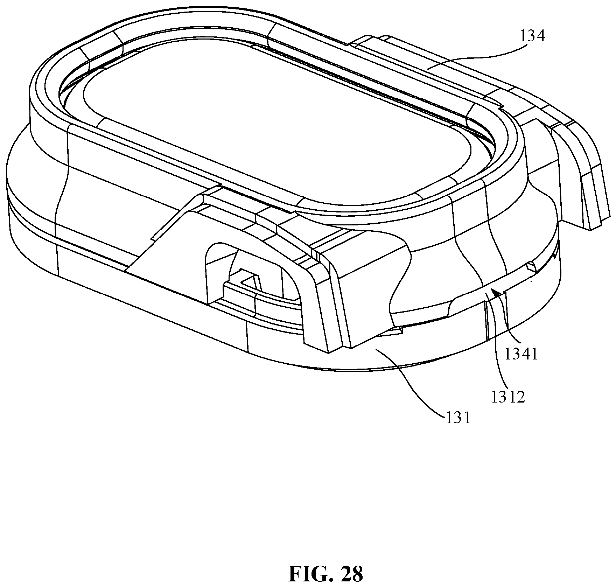

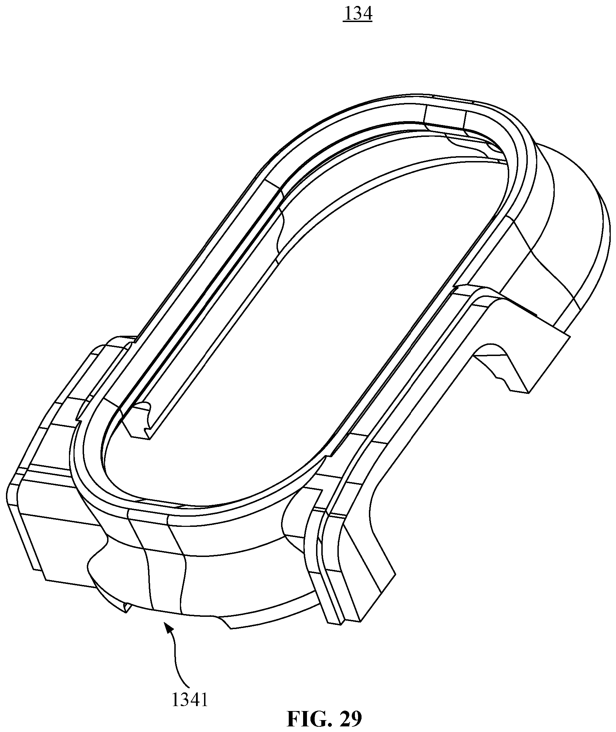

In some embodiments, in conjunction with FIG. 28 and FIG. 29, the bracket 134 is provided with a second notch 1341 at an end facing the basket 131, the second notch 1341 corresponding to the assembly table surface 1312 along the circumferential direction of the basket 131.

By providing the second notch 1341, the bracket 134 can avoid the metal pad 132 and the wire 133 more easily when supported on the annular table surface 1311, facilitating the assembly of the bracket 134 with the basket 131 and improving the assembly efficiency.

In some embodiments, in conjunction with FIG. 22 to FIG. 24, the shell assembly 10 further forms a second accommodation cavity 1012 and includes the partition wall 104 for separating the first accommodation cavity 1011 and the second accommodation cavity 1012. The earphone 100 further includes the battery 14 disposed in the second accommodation cavity 1012, and the metal pad 132 is disposed on a side of the basket 131 facing the partition wall 104.

A portion of the inner peripheral wall of the first accommodation cavity 1011 may be formed by the partition wall 104, and a portion of the sealant may seal the gap between the outer peripheral wall of the basket 131 and the partition wall 104. By providing the partition wall 104, the risk of water flowing from a side of the loudspeaker 13 close to a sound outlet hole 1013 to the second accommodation cavity 1012 may be reduced.

The battery 14 may be used as a power source to power the loudspeaker 13. The first accommodation cavity 1011 and the second accommodation cavity 1012 are provided adjacent to each other, which is conducive to simplifying the connection line between the battery 14 and the loudspeaker 13. By disposing the metal pad 132 on the side of the basket 131 facing the partition wall 104, the spacing distance between the battery 14 and the metal pad 132 can be reduced, which is conducive to further simplifying the connection line between the battery 14 and the loudspeaker 13. Further, the metal pad 132 may be connected to the battery 14 via the wire 133 to enable the battery 14 to power the loudspeaker 13.

The foregoing descriptions are merely part of the embodiments of the present disclosure and are not intended to limit the scope of protection of the present disclosure. Any equivalent devices or equivalent process modifications made based on the contents of the specification and drawings of the present disclosure, or any direct or indirect applications in other related technical fields, shall be deemed to fall within the scope of protection of the present disclosure.

## Claims

1. An earphone, comprising:
an ear hook; and
a core module connected to the ear hook, the core module including an outer shell, a decorative cover, and a touch module,
the outer shell including an outer surface away from an ear of a user when the earphone is in a wearing state, the decorative cover being disposed on the outer surface of the outer shell and configured to form a touch positioning region for the user to perform touch positioning;
a positioning protrusion being disposed on the outer shell and/or the decorative cover, the positioning protrusion being located in the touch positioning region and protruding from an outer surface of the decorative cover away from the outer shell;
the touch module being disposed on the outer shell and including a touch detection region that at least partially overlaps with the touch positioning region.

2. The earphone of claim 1, wherein
at least a portion of an edge of the decorative cover is exposed on the outer surface of the outer shell to enclose the touch positioning region.

3. The earphone of claim 2, wherein
the edge of the decorative cover is configured as a ring and is completely exposed on the outer surface of the outer shell to enclose the touch positioning region; and
the edge of the decorative cover surrounds the positioning protrusion.

4. The earphone of claim 1, wherein
a positioning groove is disposed on the outer surface of the outer shell, and the decorative cover is accommodated in the positioning groove through a groove opening of the positioning groove.

5. The earphone of claim 4, wherein
the positioning groove and the decorative cover match in shape and size; and/or,
a seam between an edge of the decorative cover and an edge of the groove opening of the positioning groove is exposed on the outer surface, and the seam surrounds the positioning protrusion.

6. The earphone of claim 1, wherein
the positioning protrusion protrudes from the outer surface of the outer shell, the decorative cover is provided with a positioning hole, and the positioning protrusion passes through the positioning hole; or,
the positioning protrusion protrudes from the outer surface of the decorative cover and is integrally formed with the decorative cover.

7. The earphone of claim 1, wherein
the outer shell has a length direction, a width direction, and a thickness direction that are perpendicular to each other, and the outer shell is stacked on the ear of the user along the thickness direction when the earphone is in the wearing state;
a ratio of a dimension of the decorative cover to a dimension of the outer shell along the length direction is greater than or equal to 0.5 and less than or equal to 0.8; and
a ratio of a dimension of the decorative cover to a dimension of the outer shell along the width direction is greater than or equal to 0.6 and less than or equal to 0.95.

8. The earphone of claim 7, wherein
the outer shell includes a connection end connected to the ear hook and a free end away from the connection end along the length direction, and the decorative cover is closer to the connection end.

9. The earphone of claim 8, wherein
the outer shell is bent along the thickness direction toward the outer surface of the outer shell so that the free end is closer to an ear hole of the ear of the user than the connection end.

10. The earphone of claim 1, wherein
the outer shell has a length direction, a width direction, and a thickness direction that are perpendicular to each other, and the outer shell is stacked on the ear of the user along the thickness direction when the earphone is in the wearing state; and
the positioning protrusion is configured as a strip, and an extension direction of the positioning protrusion intersects with the length direction and the width direction, respectively.

11. The earphone of claim 1, wherein
a roughness of the outer surface of the decorative cover is greater than a roughness of the outer surface of the outer shell; and/or
a color of the outer surface of the decorative cover is different from a color of the outer surface of the outer shell; and/or
a material of the decorative cover is different from a material of the outer shell.

12. The earphone of claim 1, wherein
the touch module includes a touch metal pattern and a circuit board,
the circuit board is disposed inside the outer shell,
the touch metal pattern is disposed inside the outer shell or sandwiched between the decorative cover and the outer shell,
the touch metal pattern is electrically connected to the circuit board, and
the touch metal pattern is configured to form the touch detection region.

13. The earphone of claim 12, wherein
the touch metal pattern is further configured as a radio frequency antenna of the earphone.

14. The earphone of claim 1, wherein
the outer shell has a length direction, a width direction, and a thickness direction that are perpendicular to each other, and the outer shell is stacked on the ear of the user along the thickness direction when the earphone is in the wearing state;
the outer shell includes a connection end connected to the ear hook and a free end away from the connection end along the length direction, and
the outer shell is bent along the thickness direction toward the outer surface of the outer shell, so that the free end is closer to an ear hole of the ear of the user than the connection end, and the decorative cover is closer to the connection end.

15. The earphone of claim 14, wherein
the outer surface of the outer shell and the outer surface of the decorative cover together form an outer surface of the core module;
the outer surface of the core module is configured as an outwardly arched shape;
at least two sound pickup holes are disposed on the outer surface of the core module;
the two sound pickup holes are located on two opposite slopes of the outer surface of the core module, respectively; and/or,
the touch detection region is closer to the connection end than the positioning protrusion, or the touch detection region surrounds the positioning protrusion.

16. The earphone of claim 15, wherein
the positioning protrusion is configured as a strip, and the two sound pickup holes are located on two sides of the positioning protrusion, respectively.

17. The earphone of claim 14, wherein
the free end has a first reference position farthest from the connection end along the length direction, and the decorative cover has a second reference position closest to the first reference position along the length direction;
the outer shell includes an arcuate transition region between the first reference position and the second reference position; and
from the second reference position to the first reference position, the arcuate transition region gradually approaches the ear of the user along the thickness direction when the earphone is in the wearing state.

18. The earphone of claim 1, wherein
the outer shell forms an accommodation space, and the core module is provided with two sound pickup holes, the accommodation space is in flow communication with the external environment through the two sound pickup holes,
one of the two sound pickup holes passes through the outer shell and is located at a periphery of the decorative cover, and the other one of the two sound pickup holes passes through the outer shell and the decorative cover; and
the core module includes two microphones, and the two microphones are spaced apart in the accommodation space and correspond one-to-one with the two sound pickup holes.

19. The earphone of claim 18, wherein
a distance between the two sound pickup holes is greater than or equal to a dimension of the decorative cover along an arrangement direction of the two microphones; and/or,
the outer shell has a length direction and a width direction that are perpendicular to each other, the outer shell has a connection end and a free end along the length direction;
the connection end is connected to the ear hook;
the arrangement direction of the two microphones intersects with the length direction and the width direction, respectively; and
the sound pickup hole that passes through the decorative cover is closer to the connection end and an edge of the decorative cover away from the ear hook along the width direction than the sound pickup hole located at the periphery of the decorative cover; and/or,
the touch detection region is located between the two sound pickup holes.

20. The earphone of claim 1, wherein
the outer shell forms an accommodation space, and the core module is provided with a sound pickup hole passing through the outer shell, the accommodation space is in flow communication with the external environment though the sound pickup hole;
the core module includes a microphone and a sealing component, and the microphone is disposed in the accommodation space and corresponds to the sound pickup hole to pick up sound of the external environment through the sound pickup hole; and
at least a portion of the sealing component is disposed between the outer shell and the microphone and is configured to isolate a sound pickup path from the accommodation space.

21. The earphone of claim 20, wherein
the core module further includes a fixing plate, the fixing plate is accommodated in the accommodation space and includes a through hole, and the microphone is fixed to one side of the fixing plate and covers the through hole; and
at least a portion of the sealing component is disposed in the accommodation space and abuts between the outer shell and a side of the fixing plate away from the microphone, and enables the through hole and the sound pickup hole to be in flow communication with each other.

22. The earphone of claim 21, wherein
the microphone passes through the outer shell and is located at a periphery of the decorative cover;
the sealing component includes a sealing gasket and a mesh component, and the sealing gasket and the mesh component are stacked and disposed in the accommodation space between the fixing plate and the outer shell.

23. The earphone of claim 22, wherein
the sealing gasket is stacked on the fixing plate and is closer to the through hole than the mesh component; and
the mesh component is located between the sealing gasket and the outer shell and is closer to the sound pickup hole than the sealing gasket.

24. The earphone of claim 21, wherein
the microphone passes through the outer shell and the decorative cover; and
the sealing component includes a sealing gasket and at least one mesh component, the sealing gasket is disposed in the accommodation space between the outer shell and the fixing plate and directly abuts the outer shell and the fixing plate, and the least one mesh component is disposed between the outer shell and the decorative cover.

25. The earphone of claim 24, wherein
the least one mesh component includes two mesh components, one of the two mesh components is disposed between the outer shell and the decorative cover, and the other one of the two mesh components is stacked with the sealing gasket and located between the outer shell and the fixing plate.

26. The earphone of any one of claims 22 to 25, wherein
the least one mesh component includes an annular double-sided adhesive and a mesh,
the annular double-sided adhesive is stacked with the mesh and bonded to the mesh, and
the mesh faces the through hole and the sound pickup hole.

27. The earphone of claim 26, wherein
the least one mesh component includes two layers of annular double-sided adhesive and one layer of mesh, and the mesh is stacked and bonded between the two layers of annular double-sided adhesive; or,
the least one mesh component includes two layers of annular double-sided adhesive and two layers of mesh, the two layers of annular double-sided adhesive are spaced apart, one layer of the mesh is stacked and bonded between the two layers of annular double-sided adhesive, and one layer of the annular double-sided adhesive is stacked between the two layers of mesh.

28. The earphone of claim 21, wherein the fixing plate is a circuit board.
